# EUROPEAN PATENT APPLICATION

(11) **EP 3 492 259 A1**
(43) Date of publication of application: **05.06.2019**
(21) Application number: 17834541.9
(22) Date of filing: 28.07.2017
(51) Int. Cl.: B32B 27/00, C09D 5/00, C09D 5/08, C09D 183/08, C09D 183/12, C09K 3/18

(54) **SURFACE TREATMENT AGENT AND ARTICLE COMPRISING LAYER FORMED FROM SURFACE TREATMENT AGENT**

(30) Priority: 29.07.2016 JP 2016150323
(71) Applicant: Daikin Industries, Ltd., Osaka-shi, Osaka 530-8323 (JP)
(72) Inventor: TAKANO, Mayuko, Osaka-shi Osaka 530-8323 (JP); OZAWA, Kaori, Osaka-shi Osaka 530-8323 (JP); MITSUHASHI, Hisashi, Osaka-shi Osaka 530-8323 (JP); YAMASHITA, Tsuneo, Osaka-shi Osaka 530-8323 (JP); NAMIKAWA, Takashi, Osaka-shi Osaka 530-8323 (JP)
(74) Representative: Hoffmann Eitle
(86) International application number: PCT/JP2017/027475
(87) International publication number: WO 2018/021539

(57) **Abstract**

An article comprising a base material and a layer formed from a compound represented by the following formula (1) or from a surface-treating agent comprising the compound: 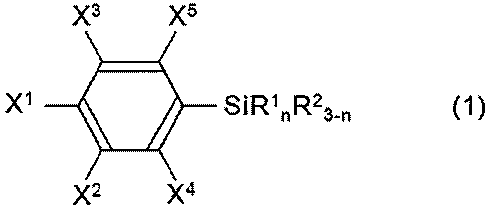 wherein each of symbols is as defined in the description.

## Description

### Technical Field

The present invention relates to a surface-treating agent and an article including a layer formed from the surface-treating agent.

### Background Art

Certain fluorine-containing silane compounds are known to be capable of providing superior water-repellency, oil-repellency, antifouling property, and so forth when being used for surface treatment of a base material. Layers formed from a surface-treating agent containing a fluorine-containing silane compound (hereinafter, also referred to as "surface-treating layer") are provided, as what is called functional thin film, for a wide variety of base materials including a glass, a plastic, a fiber, and a building material.

Known as one of such fluorine-containing silane compounds is a fluoroalkylsilane having a fluoroalkyl group in the molecular backbone and a hydrolyzable group bonding to a Si atom at a molecular end (Patent Literature 1).

### Prior Art Literature

### Patent Literature

Patent Literature 1: JP 2011-505422 A

### Summary of the Invention

### Problem to be Solved by the Invention

Fluorine-containing silane compounds are provided for a wide variety of base materials including a glass, a plastic, a fiber, and a building material to form a surface-treating layer. The surface-treating layer formed on such base material may be exposed to various environments. For example, surface-treating layers on car glass windows or building materials may be exposed to sunlight, rain, etc. Surface-treating layers on touch panels may be exposed to human perspiration, etc. Hence, fluorine-containing silane compounds, which have a broad range of applications, require weatherability to exert the functions (for example, water-repellency, oil-repellency, antifouling property, etc.) for a long period of time under various environments.

An object of the present invention is to provide an article including a surface-treating layer with high weatherability, and a surface-treating agent capable of forming such a surface-treating layer.

### Means to Solve the Problem

The present inventors diligently examined to find that use of a fluorine-containing silane compound having a phenylene group between a fluorine-containing moiety to exert the function of a surface-treating layer and a silane moiety having binding ability to the base material allows formation of a surface-treating layer with high weatherability, and thus the present invention was completed.

Specifically, the present invention provides, in a first aspect, an article including a base material and a layer formed from a compound represented by the following formula (1) or from a surface-treating agent containing the compound: 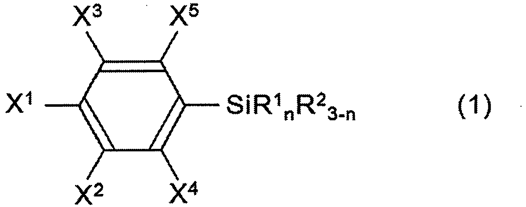 wherein
X¹ to X⁵ each independently represent a hydrogen atom, a halogen atom, a hydrocarbon group, a nitro group, a hydroxy group, or an Rf group, provided that at least one of X¹ to X⁵ is an Rf group;
the Rf group represents R¹⁵-R¹⁶-;
R¹⁵ represents a fluorine-containing hydrocarbon group optionally having an ether bond;
R¹⁶ represents a single bond or a divalent organic group;
R¹ independently in each occurrence represents a hydroxy group, a hydrolyzable group, or a halogen atom;
R² independently in each occurrence represents a hydrogen atom, an alkyl group, or an aryl group; and
n is an integer of 1 to 3 (hereinafter, also referred to "the fluorine-containing silane compound according to the present invention", simply).

The present invention provides, in a second aspect, a surface-treating agent containing:
(A) a compound represented by the following formula (1): 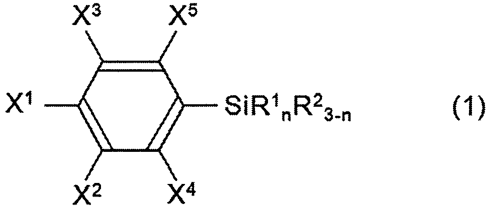 wherein
   X¹ to X⁵ each independently represent a hydrogen atom, a halogen atom, a hydrocarbon group, a nitro group, a hydroxy group, or an Rf group, provided that at least one of X¹ to X⁵ is the Rf group;
   the Rf group represents R¹⁵-R¹⁶-;
   R¹⁵ represents a fluorine-containing hydrocarbon group optionally having an ether bond;
   R¹⁶ represents a single bond or a divalent organic group;
   R¹ each independently in each occurrence represents a hydroxy group, a hydrolyzable group, or a halogen atom;
   R² each independently in each occurrence represents a hydrogen atom, an alkyl group, or an aryl group; and
   n is an integer of 1 to 3; and
(B) one or more additional components selected from a silicon-containing compound, a fluorine-containing oil, a silicone oil, and a solvent.

### Effect of the Invention

The present invention can provide an article including a surface-treating layer with superior weatherability through use of a fluorine-containing silane compound having a phenylene group directly bonding to a silane group.

### Embodiments to Carry Out the Invention

Hereinafter, the article according to the present invention will be described.

The article according to the present invention includes a base material and a layer formed from a compound represented by the following formula (1): 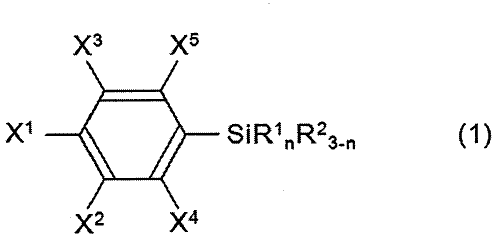 or from a surface-treating agent containing the compound.

The article according to the present invention can be used for a vast variety of applications by virtue of the superior weatherability of the surface-treating layer.

The article according to the present invention can be, for example, an optical member, a building member, or a pottery or porcelain product. Examples of such optical members include lenses such as glasses and sunglasses; displays such a cathode ray tube (CRT; for example, TV, PC monitor), a liquid crystal display, a plasma display, an organic EL display, an inorganic thin-film EL dot matrix display, a rear projection display, a vacuum fluorescent display (VFD), and a field emission displays (FED), and a front surface protective plate, an anti-scattering film, an antireflection plate, a polarizing plate, and an anti-glare plate for these displays, and these displays with an antireflection film provided on the surface; touch panel sheets for devices including cellular phones and personal digital assistants; disc surfaces of optical discs such as a Blu-ray (registered trademark) disc, a DVD disc, a CD-R, and MO; an optical fiber; a glass surface such as a glass window and a windshield for automobile; a camera lens; a solar panel; and an optical filter.

The article according to the present invention can be produced, for example, in the following manner.

First, a base material is provided.

The base material applicable to the present invention is not limited, and may be any of organic materials, inorganic materials, and organic-inorganic hybrid materials.

For example, the base material applicable to the present invention is not limited, and can be composed of glass, resin (natural or synthetic resin; e.g., the resin may be a common plastic material, and may be in the form of a sheet or a film, or any other form), metal (the metal may be simple substance such as aluminum, copper, or iron, or a complex such as an alloy, or the like), ceramic, semiconductor (e.g., silicon, germanium), fiber (e.g., woven, nonwoven), fur, leather, concrete, wood, stone, or any other suitable material.

Another example of materials to compose the base material applicable to the present invention is sapphire glass.

The base material may include various layers depending on the specific specification, etc. In using as an optical member, for example, the base material may include an antireflection layer, an insulating layer, an adhesive layer, a protecting layer, a decorated frame layer (I-CON), an atomizinglayer, a polarizing film, a phase difference film, or a liquid crystal display module. In the present invention, the term "base material" is meant to include these layers, films, and the like.

The shape of the base material is not limited, and may be, for example, a sheet, a film, or any other form. The surface region of the base material should be formed a functional film may be at least part of the surface of the base material, and can be appropriately determined in accordance with the usage and specific specification, etc., of an article to be produced.

To such a surface of the base material, the compound represented by the formula (1) or the surface-treating agent containing the compound represented by the formula (1) is then applied to form a film thereof. This film is left to stand, or post-treated, as necessary, to form a surface-treating layer on the base material.

Hereinafter, the compound represented by the following formula (1) will be described.

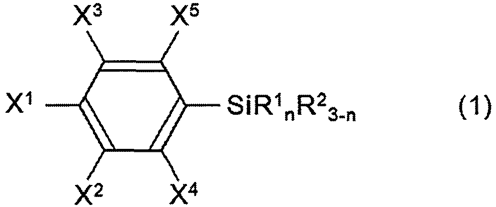

In the formula (1), X¹ to X⁵ each independently represent a hydrogen atom, a halogen atom, a hydrocarbon group, a nitro group, a hydroxy group, or an Rf group. Here, at least one of X¹ to X⁵ is the Rf group.

Examples of the "halogen atom" include a fluorine atom, a chlorine atom, a bromine atom, and an iodine atom. Among them, a fluorine atom, a chlorine atom, and a bromine atom are preferred, and a fluorine atom is more preferred.

Examples of the "hydrocarbon group" include, but are not limited to, an alkyl group, an alkenyl group, an alkynyl group, and an aryl group each having 1-100 carbon atoms (preferably having 1-20 carbon atoms) which optionally has a substituent. The hydrocarbon group may be linear, branched, or cyclic. The hydrocarbon group may have an ether bond. In this case, the hydrocarbon group has a structure in which an ether bond is inserted into the hydrocarbon group.

Examples of the substituent include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group which optionally substituted with one or more halogen atoms.

In one embodiment, the hydrocarbon group is unsubstituted.

The Rf group is R¹⁵-R¹⁶-.

R¹⁵ represents a fluorine-containing hydrocarbon group optionally having an ether bond.

Examples of the "fluorine-containing hydrocarbon group" include a fluorine-containing alkyl group, a fluorine-containing alkenyl group, a fluorine-containing alkynyl group, and a fluorine-containing aryl group each having 1-300 carbon atoms which optionally has a substituent. The fluorine-containing hydrocarbon group may be linear, branched, or cyclic. In the case that the fluorine-containing hydrocarbon group has an ether bond, the fluorine-containing hydrocarbon group has a structure in which the ether bond is inserted into the fluorine-containing hydrocarbon group.

Examples of the substituent include those for the "hydrocarbon group".

In one embodiment, the fluorine-containing hydrocarbon group is unsubstituted.

In a preferred embodiment, R¹⁵ is a perfluorohydrocarbon group optionally having an ether bond. The term "perfluorohydrocarbon group" refers to a hydrocarbon group in which the hydrogen atoms bonding to the carbon atoms are all substituted with a fluorine atom.

In a preferred embodiment, R¹⁵ is F-CₚF₂ₚ-, wherein p is an integer of 1-100, preferably an integer of 2-20, and more preferably an integer of 2-10. F-CₚF₂ₚ- may be linear or branched. Preferably, the R¹⁵ group is F-(CF₂)ₚ-.

In another preferred embodiment, R¹⁵ is a group represented by the formula R³-PFPE-.

In the formula, R³ independently in each occurrence represents an alkyl group having 1-16 carbon atoms optionally substituted with one or more fluorine atoms.

The "alkyl group having 1-16 carbon atoms" in the alkyl group having 1-16 carbon atoms optionally substituted with one or more fluorine atoms may be linear or branched, and is preferably a linear or branched alkyl group having 1-6 carbon atoms, in particular, 1-3 carbon atoms, and is more preferably a linear alkyl group having 1-3 carbon atoms.

The R³ is preferably an alkyl group having 1-16 carbon atoms which is substituted with one or more fluorine atoms, more preferably a CF₂H-C₁₋₁₅ fluoroalkylene group, and further more preferably a perfluoroalkyl group having 1-16 carbon atoms.

The perfluoroalkyl group having 1-16 carbon atoms is preferably a linear or branched perfluoroalkyl group having 1-6 carbon atoms, in particular, 1-3 carbon atoms, and is more preferably a linear perfluoroalkyl group having 1-3 carbon atoms, and specifically -CF₃, -CF₂CF₃, or -CF₂CF₂CF₃.

In the above formula, PFPE is a group represented by - (OC₆F₁₂)ₐ-(OC₅F₁₀)_{b}-(OC₄F₈)_{c}-(OC₃F₆)_{d}-(OC₂F₄)ₑ-(OCF₂)_{f}-. In this formula, a, b, c, d, e, and f are each independently an integer of 0 or more and 200 or less, provided that the summation of a, b, c, d, e, and f is at least 1. Preferably, a, b, c, d, e, and f are each independently an integer of 0 or more and 100 or less. The summation of a, b, c, d, e, and f is preferably 5 or more, and more preferably 10 or more, for example, 10 or more and 100 or less. The order of the repeating units with parentheses accompanied by a subscript of a, b, c, d, e, or f is arbitrary in the formula.

Each of these repeating units may be linear or branched, and is preferably linear. -(OC₆F₁₂)- may be, for example, -(OCF₂CF₂CF₂CF₂CF₂CF₂)-, -(OCF(CF₃)CF₂CF₂CF₂CF₂)-,-(OCF₂CF(CF₃)CF₂CF₂CF₂)-, - (OCF₂CF₂CF(CF₃)CF₂CF₂)-,-(OCF₂CF₂CF₂CF(CF₃)CF₂)-, or -(OCF₂CF₂CF₂CF₂CF(CF₃))-, and is preferably -(OCF₂CF₂CF₂CF₂CF₂CF₂)-. -(OC₅F₁₀)- is, for example, -(OCF₂CF₂CF₂CF₂CF₂)-, -(OCF(CF₃)CF₂CF₂CF₂)-,-(OCF₂CF(CF₃)CF₂CF₂)-, -(OCF₂CF₂CF(CF₃)CF₂)-, or-(OCF₂CF₂CF₂CF(CF₃))-, and is preferably -(OCF₂CF₂CF₂CF₂CF₂)-. -(OC₄F₈)- may be any of -(OCF₂CF₂CF₂CF₂)-, - (OCF(CF₃)CF₂CF₂)-, -(OCF₂CF(CF₃)CF₂)-, - (OCF₂CF₂CF(CF₃))-, -(OC(CF₃)₂CF₂)-,-(OCF₂C(CF₃)₂)-, -(OCF(CF₃)CF(CF₃))-, -(OCF(C₂F₅)CF₂)-, and-(OCF₂CF(C₂F₅))-, and is preferably -(OCF₂CF₂CF₂CF₂)-.-(OC₃F₆)- may be any of -(OCF₂CF₂CF₂)-, - (OCF(CF₃)CF₂)-, and-(OCF₂CF(CF₃))-, and is preferably -(OCF₂CF₂CF₂)-. -(OC₂F₄)-may be any of -(OCF₂CF₂)- and - (OCF(CF₃))-, and is preferably -(OCFCF₂)-.

In one embodiment, the PFPE is -(OC₃F₆)_{d}-, wherein d is an integer of 1 or more and 200 or less, preferably 5 or more and 200 or less, more preferably 10 or more and 200 or less. Preferably, PFPE is -(OCF₂CF₂CF₂)_{d}- (wherein d is an integer of 1 or more and 200 or less, preferably 5 or more and 200 or less, more preferably 10 or more and 200 or less), or -(OCF(CF₃)CF₂)_{d}- (wherein d is an integer of 1 or more and 200 or less, preferably 5 or more and 200 or less, more preferably 10 or more and 200 or less). More preferably, PFPE is -(OCF₂CF₂CF₂)_{d}-, wherein d is an integer of 1 or more and 200 or less, preferably 5 or more and 200 or less, more preferably 10 or more and 200 or less.

In another embodiment, PFPE is -(OC₄F₈)_{c}-(OC₃F₆)_{d}-(OC₂F₄)ₑ-(OCF₂)_{f}-, wherein c and d are each independently an integer of 0 or more and 30 or less, and e and f are each independently an integer of 1 or more and 200 or less, preferably 5 or more and 200 or less, more preferably 10 or more and 200 or less, and the order of the repeating units with parentheses accompanied by a subscript of c, d, e, or f is arbitrary in the formula. PFPE is preferably-(OCF₂CF₂CF₂CF₂)_{c}-(OCF₂CF₂CF₂)_{d}-(OCF₂CF₂)ₑ-(OCF₂)_{f}-. In one embodiment, PFPE may be -(OC₂F₄)ₑ-(OCF₂)_{f}-, wherein e and f are each independently an integer of 1 or more and 200 or less, preferably 5 or more and 200 or less, more preferably 10 or more and 200 or less, and the order of the repeating units with parentheses accompanied by a subscript of e or f is arbitrary in the formula.

In the above embodiment, the summation of c, d, e, and f can be preferably at least 5 or more, and preferably 10 or more.

In further another embodiment, PFPE is a group represented by - (R⁷-R⁸)_{g}-. In this formula, R⁷ is OCF₂ or OC₂F₄, and preferably OC₂F₄; and R⁸ is a group selected from OC₂F₄, OC₃F₆, OC₄F₈, OC₅F₁₀, and OC₆F₁₂, or the combination of two or three groups independently selected from thereof. Preferably, R⁸ is a group selected from OC₂F₄, OC₃F₆, and OC₄F₈, or the combination of two or three groups independently selected from thereof. Examples of the combination of two or three groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, -OC₃F₆OC₃F₆-,-OC₃F₆OC₄F₈-, -OC₄F₈OC₄F₈-, -OC₄F₈OC₃F₆-, -OC₄F₈OC₂F₄-,-OC₂F₄OC₂F₄OC₃F₆-, -OC₂F₄OC₂F₄OC₄F₈-, -OC₂F₄OC₃F₆OC₂F₄-,-OC₂F₄OC₃F₆OC₃F₆-, -OC₂F₄OC₄F₈OC₂F₄-, -OC₃F₆OC₂F₄OC₂F₄-,-OC₃F₆OC₂F₄OC₃F₆-, -OC₃F₆OC₃F₆OC₂F₄-, and -OC₄F₈OC₂F₄OC₂F₄-. The g is an integer of 2-100, and preferably an integer of 2-50. In the formulas, each of OC₂F₄, OC₃F₆, OC₄F₈, OC₅F₁₀, and OC₆F₁₂ may be linear or branched, and is preferably linear. In this embodiment, PFPE is preferably -(OC₂F₄-OC₃F₆)_{g}- or-(OC₂F₄-OC₄F₈)_{g}-.

In the above embodiment, R⁸ may be a group selected from OC₂F₄, OC₃F₆, and OC₄F₈, or a group selected from OC₃F₆, OC₄F₈, OC₅F₁₀, and OC₆F₁₂, or the combination of two or three groups independently selected from thereof.

In the above embodiment, g may be an integer of 2 or more, preferably 3 or more, more preferably 5 or more, and 100 or less, preferably 50 or less.

The average molecular weight of the moiety R³-PFPE is 500-30,000, preferably 1,500-30,000, and more preferably 2,000-10,000, though the average molecular weight is not limited thereto. The term "average molecular weight" in the present invention refers to number-average molecular weight, and is measured by ¹⁹F-NMR.

In the above formula, R¹⁶ represents a single bond or a divalent organic group.

The term "divalent organic group" refers to a carbon-containing divalent group. Examples of the divalent organic group include, but are not limited to, a divalent group obtained by removing one hydrogen atom from a hydrocarbon group.

The term "hydrocarbon group" here has the same definition as the hydrocarbon group described above as that of X¹ to X⁵.

The divalent organic group can be preferably a hydrocarbon group having 1-20 carbon atoms, preferably having 1-10 carbon atoms, and more preferably having 1-4 carbon atoms, which optionally has a substituent, and can be preferably, an alkyl group, an alkenyl group, an alkynyl group, or an aryl group. The hydrocarbon group may be linear, branched, or cyclic. The divalent organic group can be more preferably an alkyl group having 1-4 carbon atoms.

In one embodiment, R¹⁵ is F-CₚF₂ₚ-, and R¹⁶ is a single bond.

In another embodiment, R¹⁵ is R³-PFPE-, and R¹⁶ is a single bond or an alkyl group having 1-4 carbon atoms.

In the formula, R¹ each independently in each occurrence represents a hydroxy group, a hydrolyzable group, or a halogen atom.

As used herein, the term "hydrolyzable group" refers to a group which can be eliminated from a main molecular chain of a compound by hydrolysis reaction. Examples of the hydrolyzable group include -OR, -OCOR, -O-N=CR₂, -NR₂, -NHR, and halogen, wherein R represents a substituted or unsubstituted alkyl group having 1-4 carbon atoms, and the hydrolyzable group is preferably -OR, that is, an alkoxy group. Examples of R include an unsubstituted alkyl group such as a methyl group, an ethyl group, a propyl group, an isopropyl group, an n-butyl group, and an isobutyl group; and a substituted alkyl group such as a chloromethyl group. Among them, an alkyl group, in particular, an unsubstituted alkyl group is preferred, and a methyl group and an ethyl group are more preferred. The hydroxy group is not limited, and may be any group generated by the hydrolysis of a hydrolyzable group.

Examples of the "halogen atom" include a fluorine atom, a chlorine atom, a bromine atom, and an iodine atom. Among them, a chlorine atom and a bromine atom are preferred, and a chlorine atom is more preferred.

In one embodiment, R¹ is a hydroxy group or a hydrolyzable group.

In another embodiment, R¹ is a halogen atom, and preferably a chlorine atom.

In the above formula, R² each independently in each occurrence represents a hydrogen atom, an alkyl group, or an aryl group.

Examples of the "alkyl group" include linear, branched, or cyclic alkyl groups having 1-100 carbon atoms, preferably having 1-20 carbon atoms, more preferably having 1-6 carbon atoms. Examples of the aryl group include an aryl group having 6-100 carbon atoms, preferably having 6-20 carbon atoms.

In the above formula (1), n is an integer of 1-3, preferably an integer of 2 or 3, and more preferably 3.

In one embodiment, only one of X¹ to X⁵ is the Rf group.

In another embodiment, 2-5 of X¹ to X⁵ are each the Rf group.

In a preferred embodiment, X¹ is the Rf group in the formula (1).

In another preferred embodiment, X¹ to X⁵ are each independently Rf or a hydrogen atom in the formula (1).

In another preferred embodiment, X¹ is the Rf group and X² to X⁵ are each a hydrogen atom in the formula (1).

The compound represented of the formula (1) can be prepared by the known method. For example, the compound represented by the formula (1) can be produced by reacting a compound represented by the following formula (1-a): 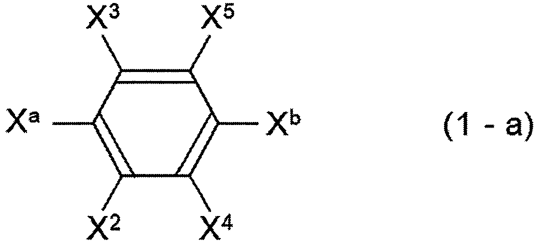 (wherein
X² to X⁵ have the same definitions as those described for the formula (1);
X^{a} represents a halogen atom, and preferably an iodine atom; and
X^{b} represents a halogen atom, and preferably a bromine atom)
with a compound represented by the following formula (1-b):

**Rf-X^{c}** **(1** - **b)**

(wherein
Rf has the same definition as that described for the formula (1); and
X^{c} represents a halogen atom, and preferably an iodine atom)
to obtain a compound represented by the following formula (1-c): 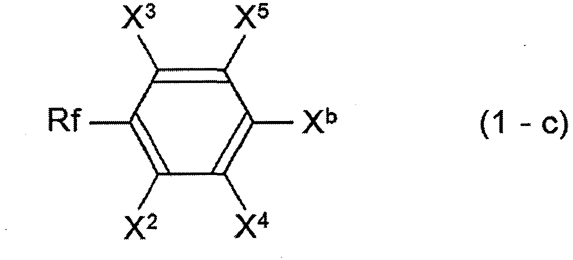 (wherein Rf, X² to X⁴, and X^{b} have the same definitions as described above)
and then reacting with a compound represented by the following formula (1-d):

X^{d}-SiR¹ₙR²₃₋ₙ (1-d)

(wherein
R¹, R², and n have the same definitions as those described for the formula (1); and
X^{d} represents an alkoxy group).

The formation of the compound represented by the general formula (1) may be performed in the presence of solvent, as necessary. Examples of the solvent include, but are not limited to, methoxynonafluorobutane, ethoxynonafluorobutane, 1,1,1,2,2,3,4,5,5,5-decafluoro-3-methoxy-4-trifluoromethylpentane, propylene glycol monomethyl ether acetate, methyl isobutyl ketone, hexafluoro meta-xylene, diethyl ether, dibutyl ether, and 1,3-bistrifluoromethylbenzene. Among them, diethyl ether, dibutyl ether, and 1,3-bistrifluoromethylbenzene are preferred, and dibutyl ether and 1,3-bistrifluoromethylbenzene are more preferred. One of them may be used alone, or two or more of them may be used simultaneously.

The compound represented by the formula (1) in the present invention is not limited to the compound produced by using the production method described herein, and can be produced by using any suitable method.

Hereinafter, the surface-treating agent containing the compound represented by the formula (1) will be described.

The surface-treating agent contains one or more compounds represented by the formula (1).

The surface-treating agent may comprise other component in addition to the compound(s) represented by the formula (1). Examples of the other component include, but are not limited to, a silicon-containing compound; a (non-reactive) fluoropolyether compound which may be understood as fluorine-containing oil, preferably a perfluoro(poly)ether compound (hereinafter, referred to as a "fluorine-containing oil"); a (non-reactive) silicone compound which may be understood as silicone oil (hereinafter, referred to as a "silicone oil"); a catalyst; and a solvent.

The other component preferably includes a silicon-containing compound.

The silicon-containing compound is preferably one capable of forming polysiloxane structure by a reaction, preferably by a sol-gel reaction.

In one embodiment, the silicon-containing compound may be an organosilicon compound, which contains carbon and silicon.

Examples of the organosilicon compound include a Si-H compound having an Si-H bond; a Si-N compound having an SiN bond, such as an aminosilane compound, silazane, silylacetamide, and silylimidazole; a Si-O compound having an Si-O bond, such as monoalkoxysilane, dialkoxysilane, trialkoxysilane, tetraalkoxysilane, siloxane, silyl ester, and silanol; a halogenosilane including a S-Cl compound having an Si-Cl bond, such as monochlorosilane, dichlorosilane, trichlorosilane, and tetrachlorosilane; a Si-(C)₄ compound; a Si-Si compound having an Si-Si bond; vinylsilane; allylsilane; and ethynylsilane. More specifically, it is preferable that the organosilicon compound (B) be at least one compound selected from the group consisting of a Si-H compound, a Si-N compound, halogenosilane, a Si-(C)₄ compound, a Si-Si compound, vinylsilane, allylsilane, and ethynylsilane. The organosilicon compound is more preferably a compound in which at least one atom selected from the group consisting of hydrogen, oxygen, and halogen is bonding to Si.

Specific examples of the organosilicon compound are as follows.

### [Si-H compounds]

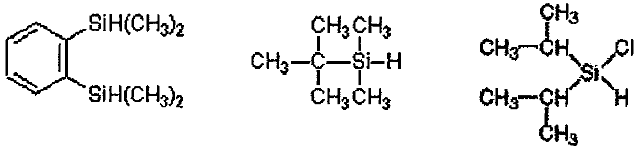

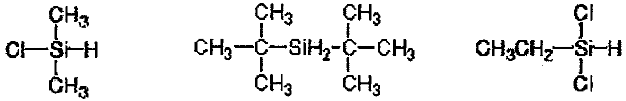

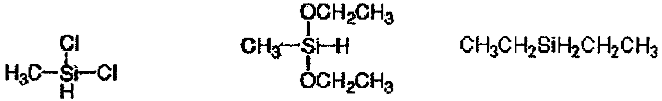

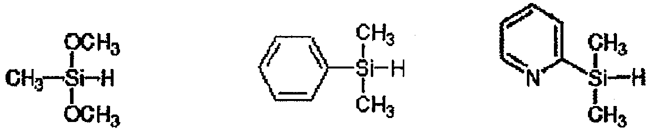

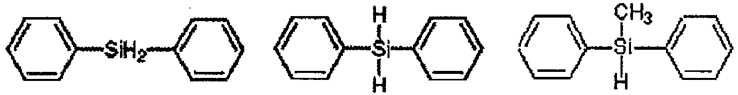

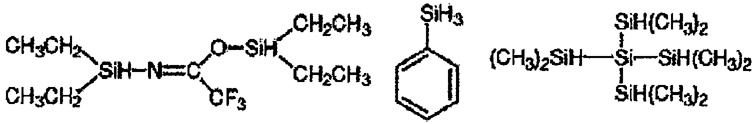

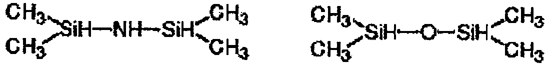

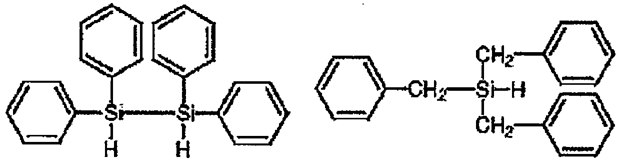

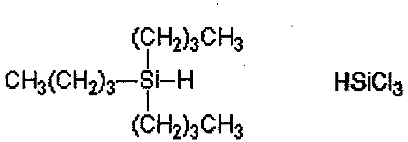

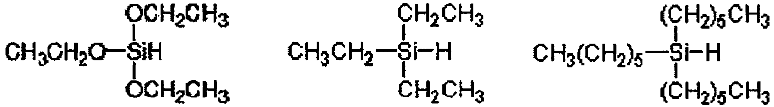

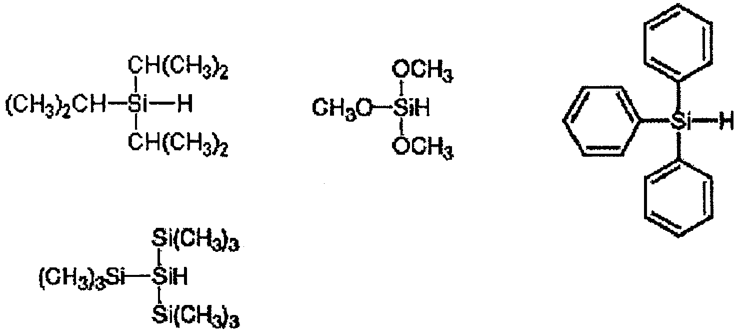

### [Si-N compounds]

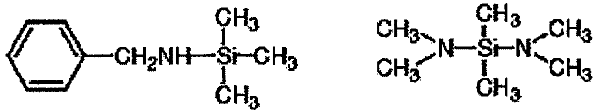

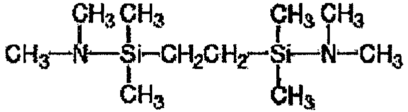

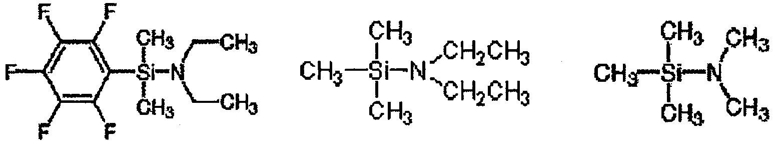

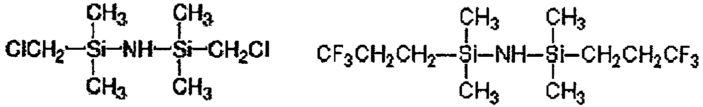

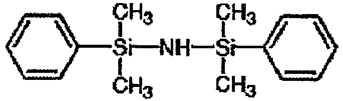

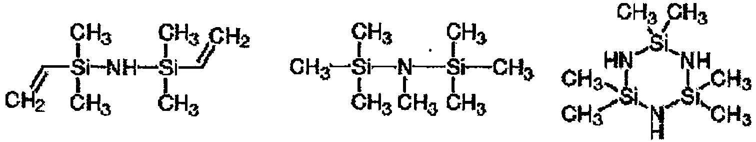

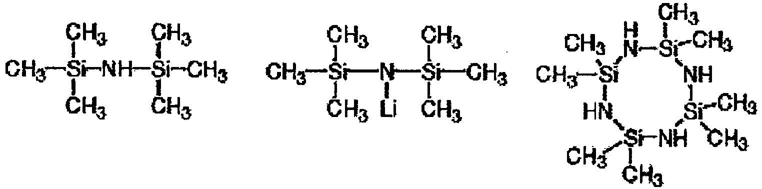

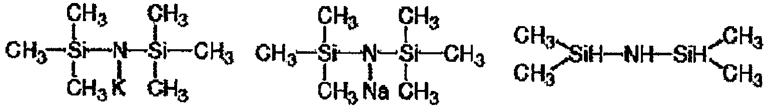

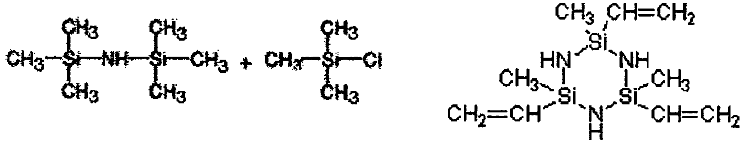

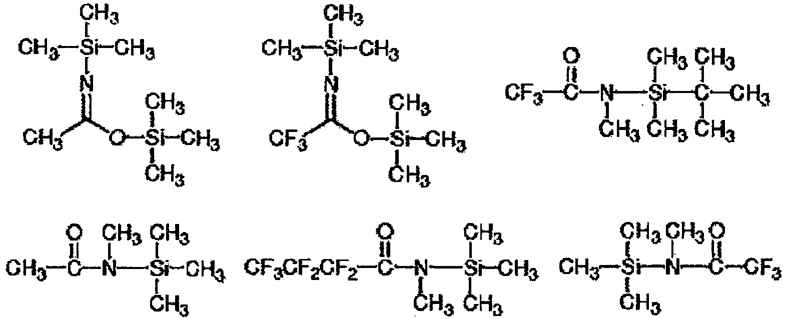

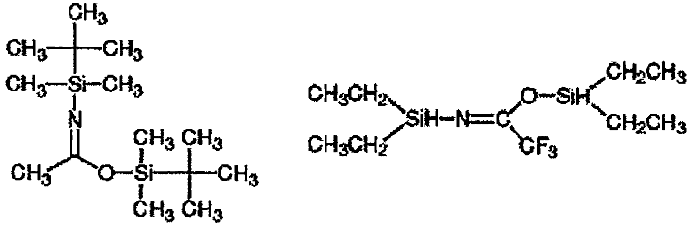

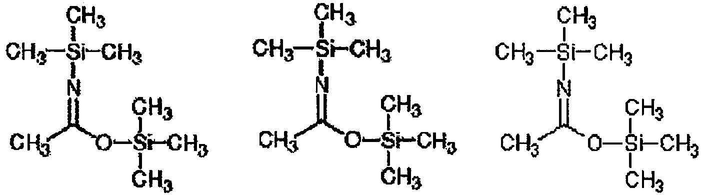

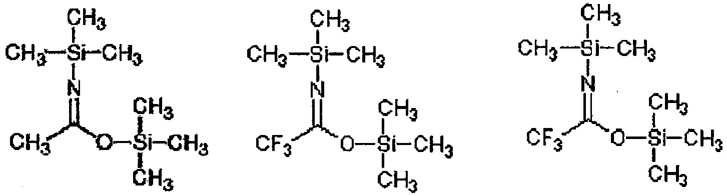

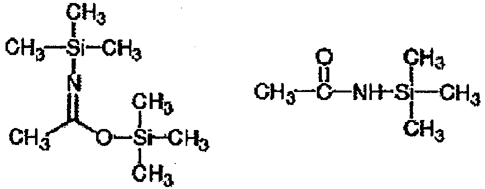

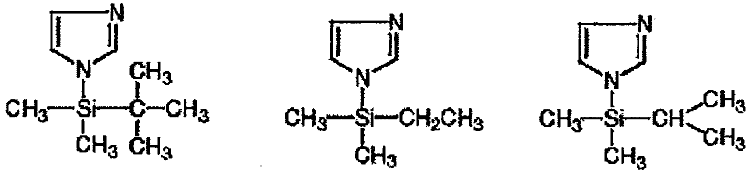

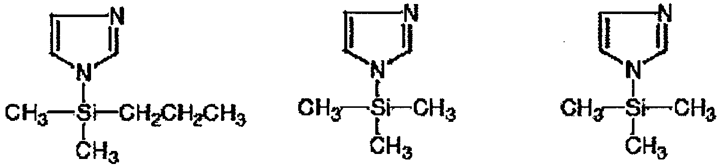

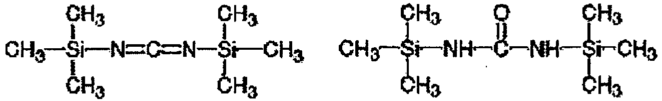

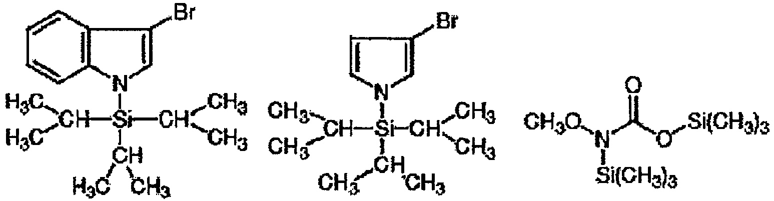

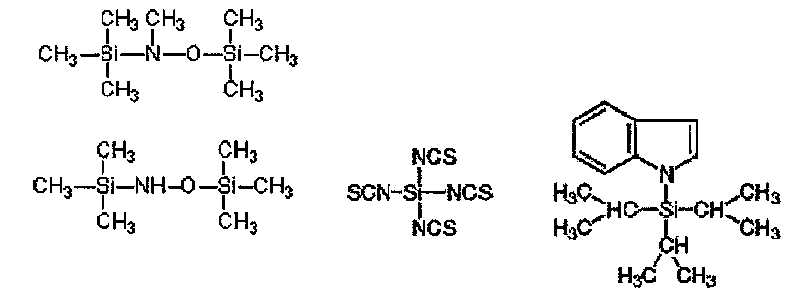

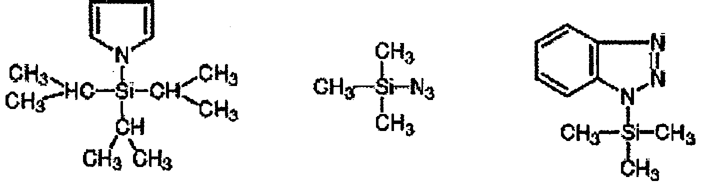

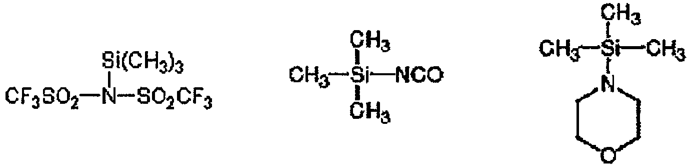

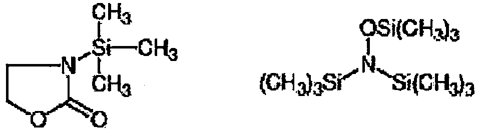

### [Si-O compounds]

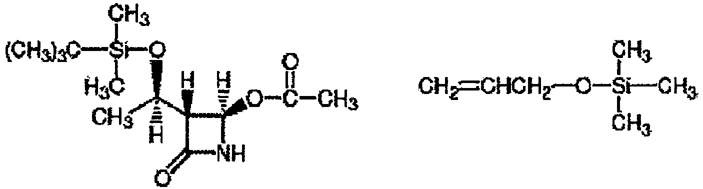

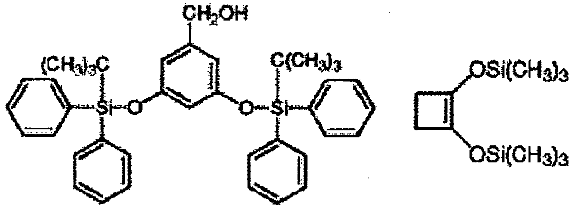

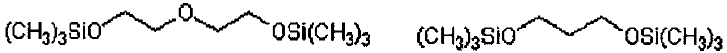

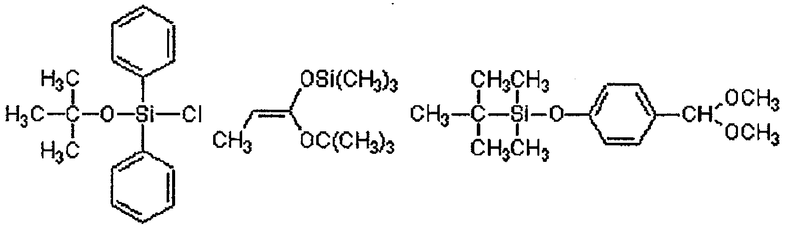

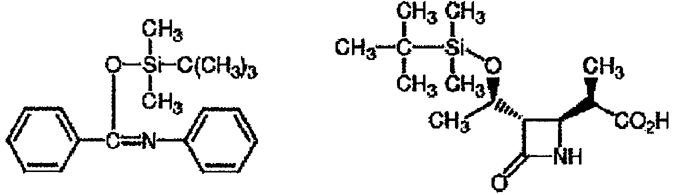

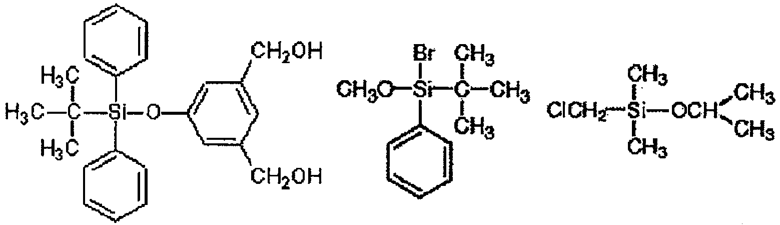

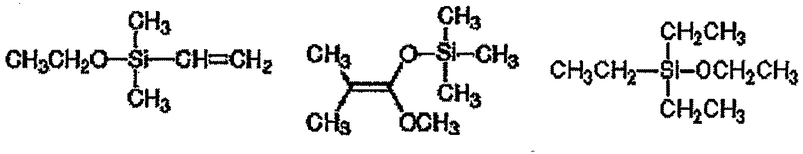

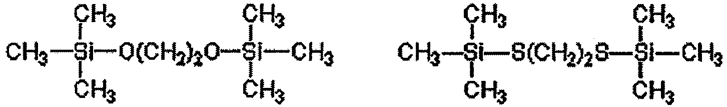

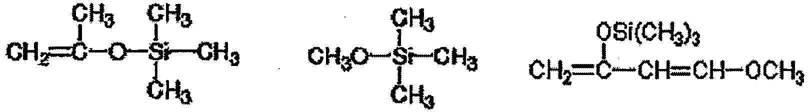

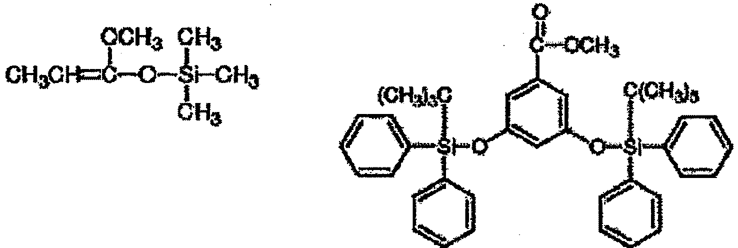

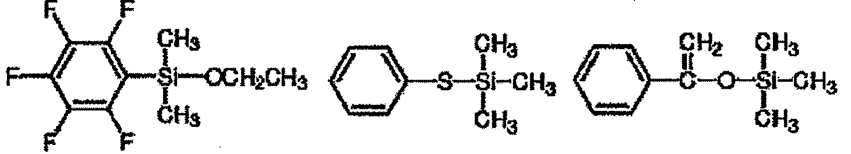

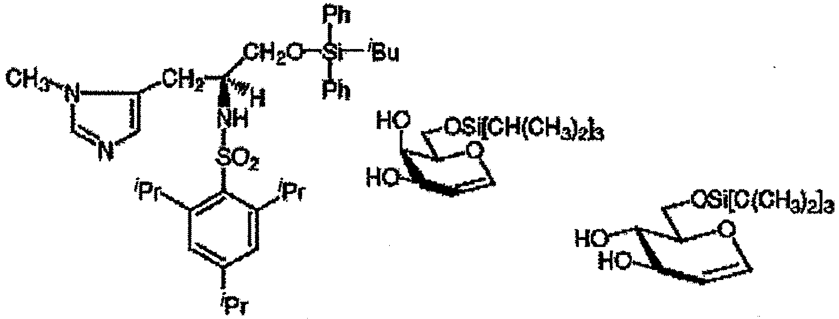

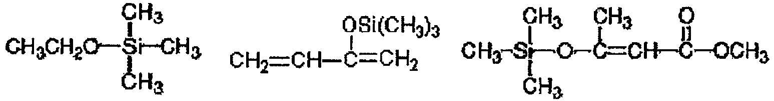

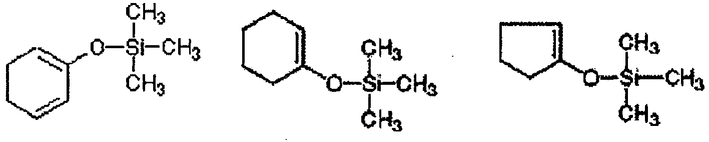

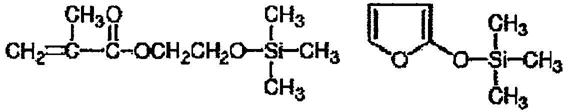

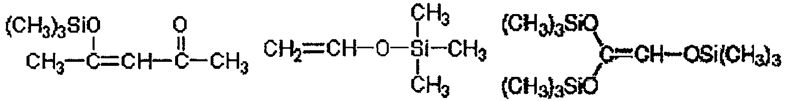

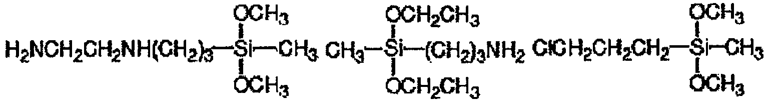

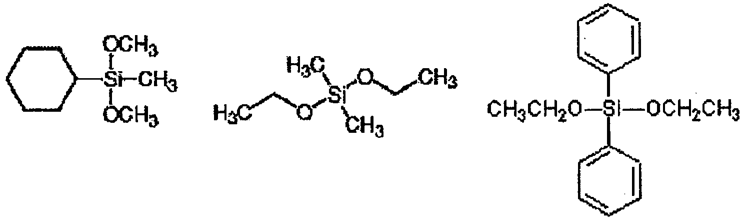

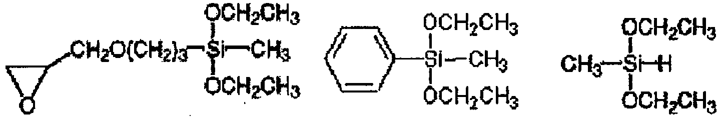

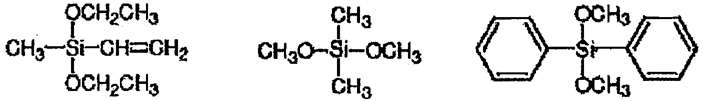

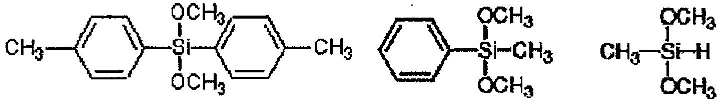

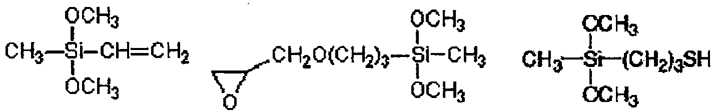

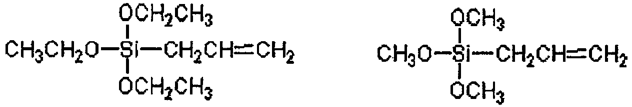

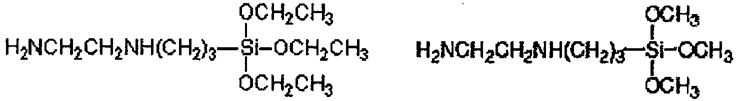

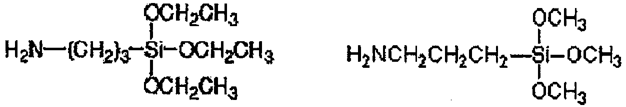

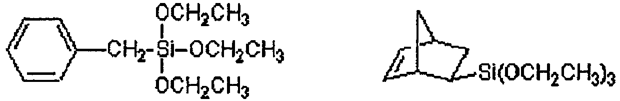

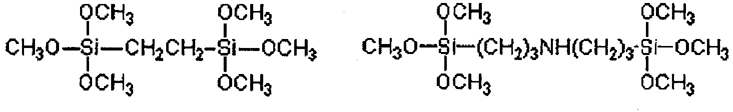

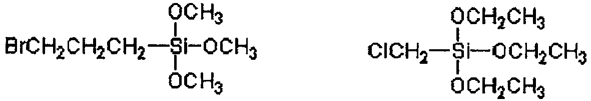

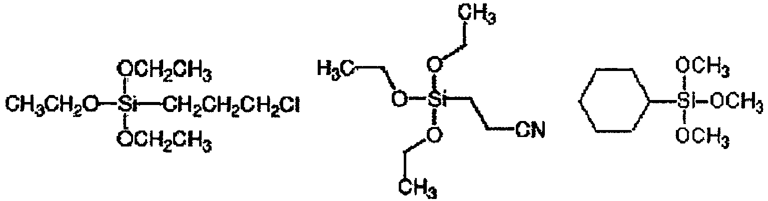

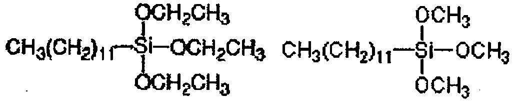

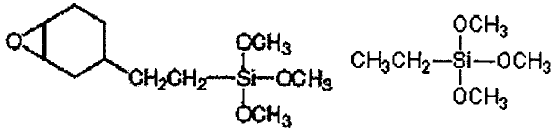

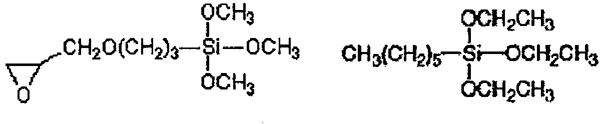

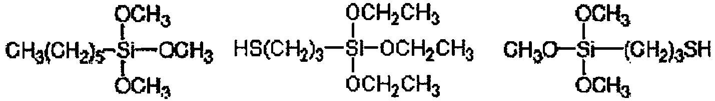

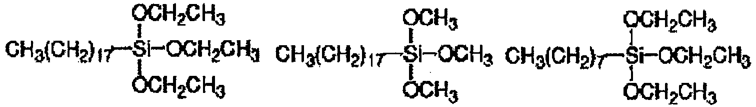

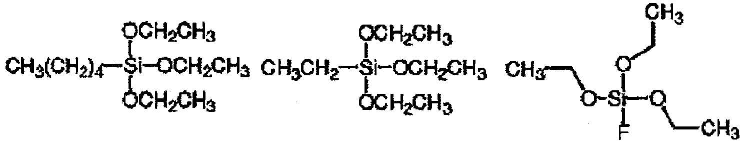

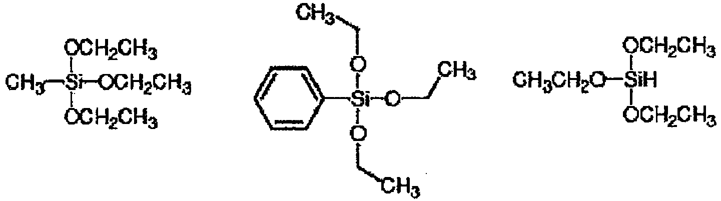

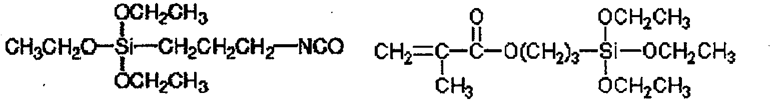

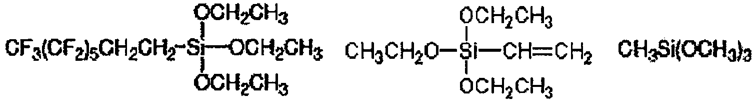

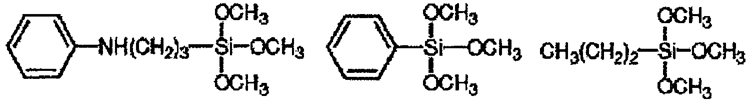

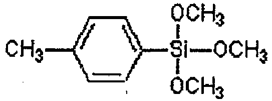

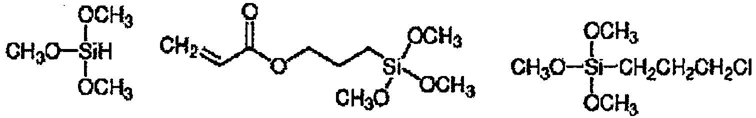

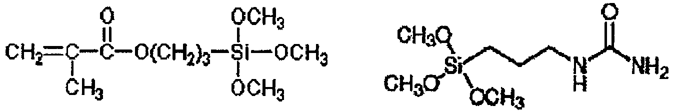

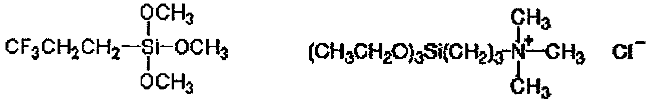

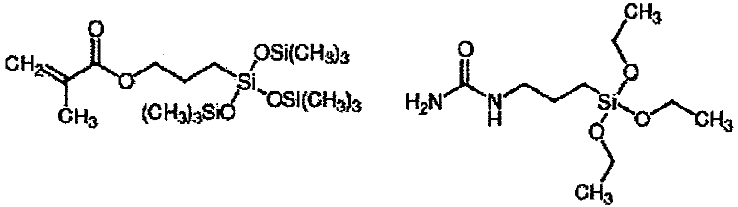

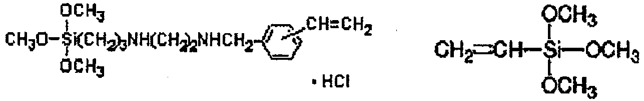

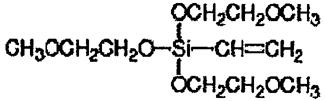

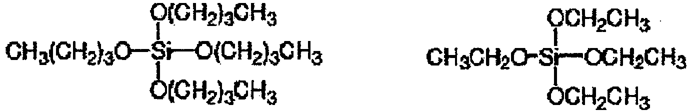

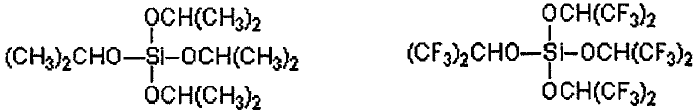

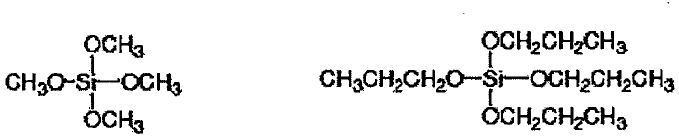

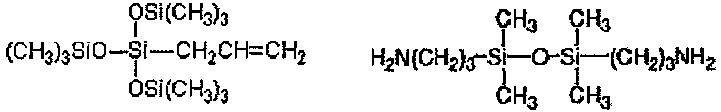

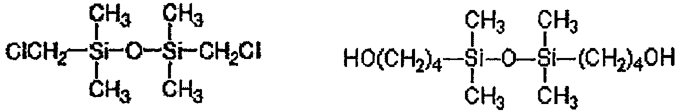

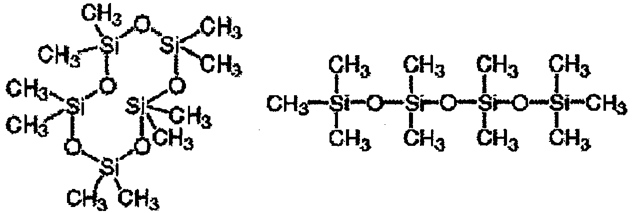

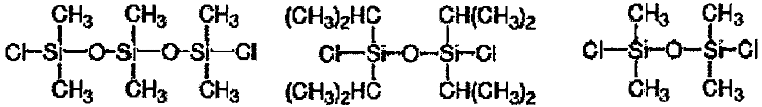

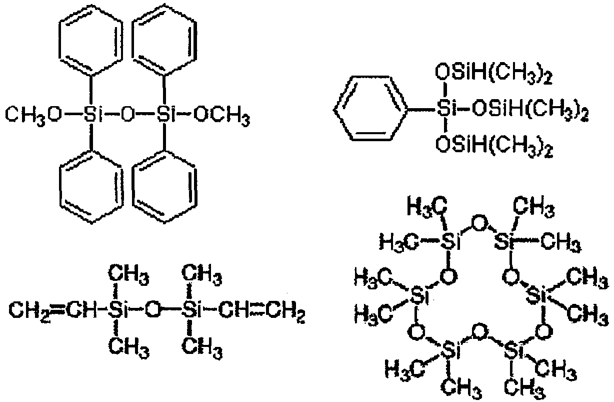

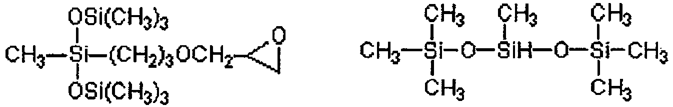

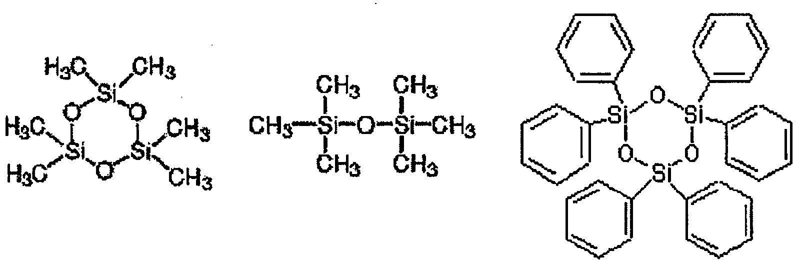

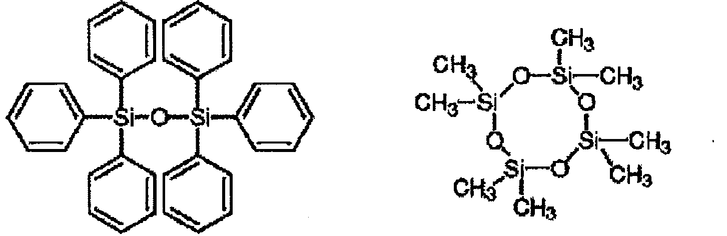

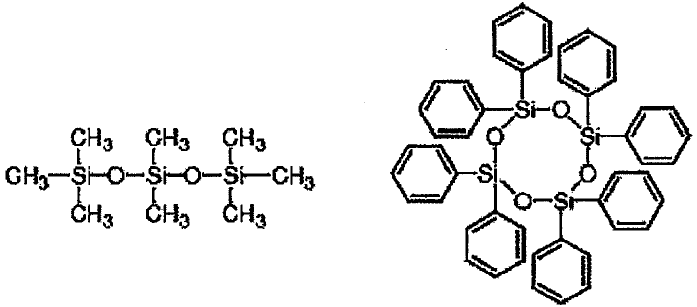

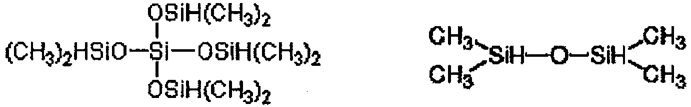

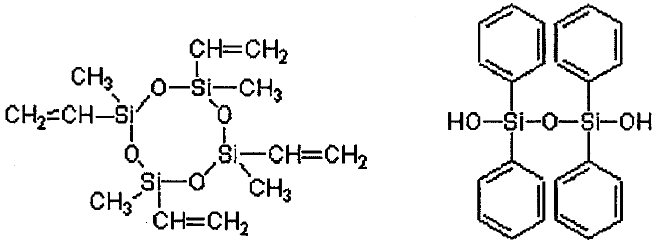

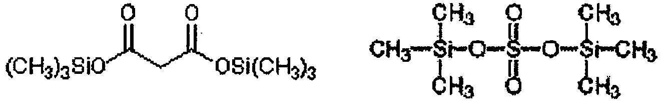

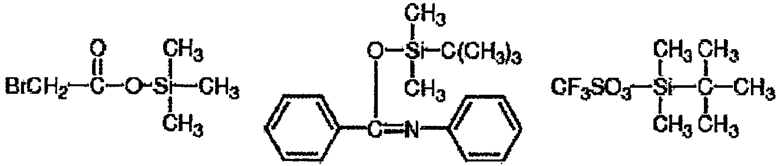

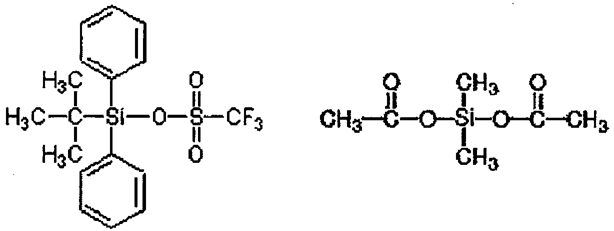

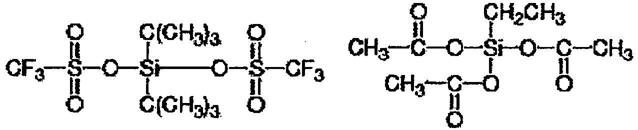

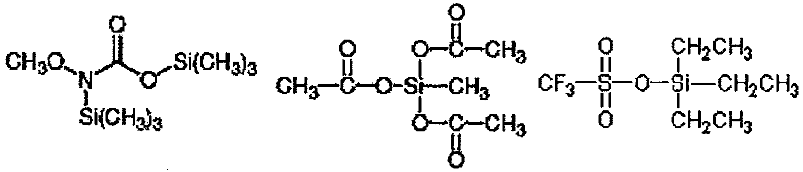

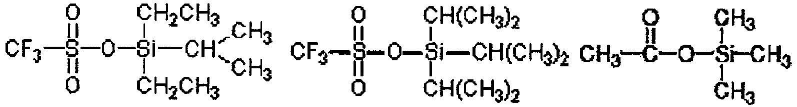

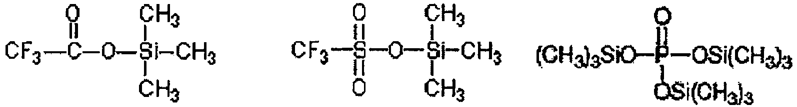

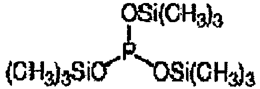

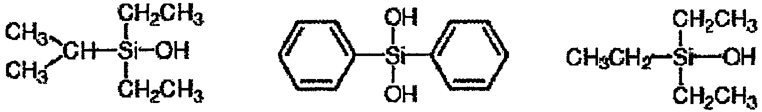

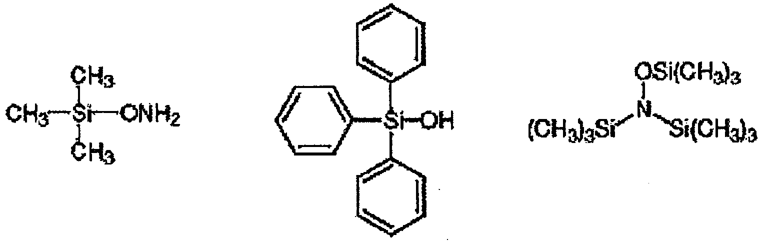

### [Halogenosilane]

### Si-Cl compounds:

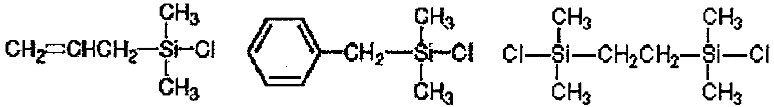

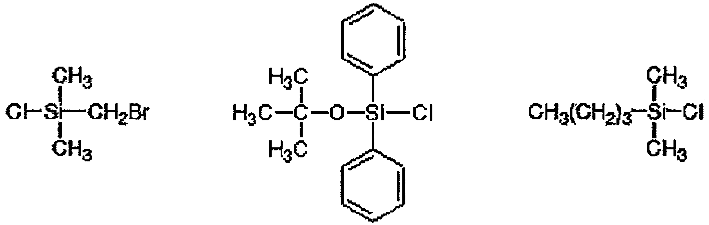

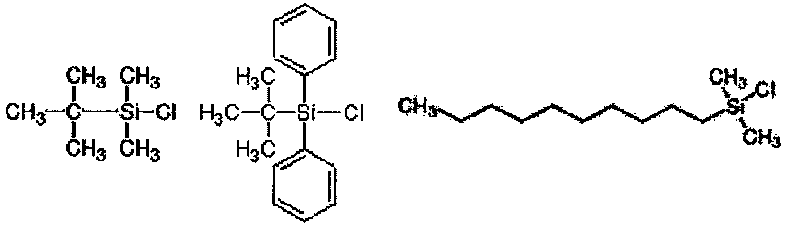

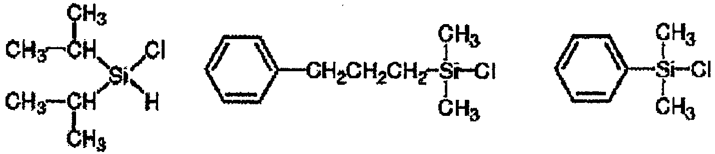

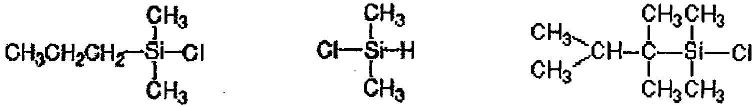

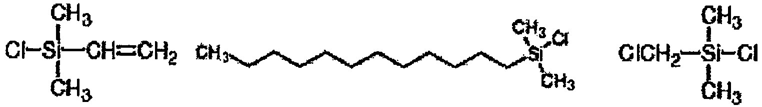

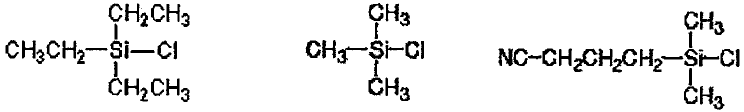

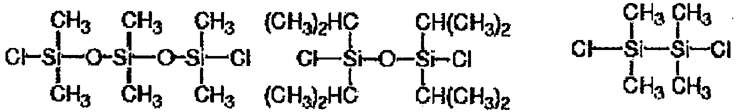

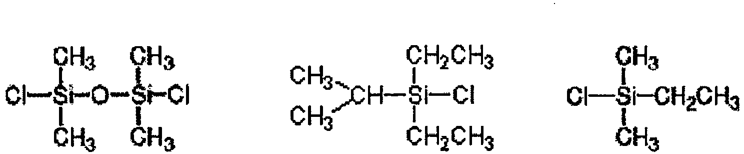

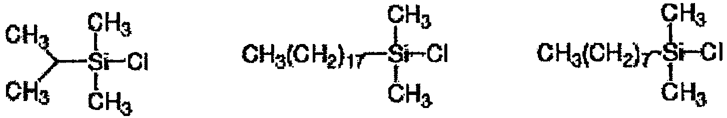

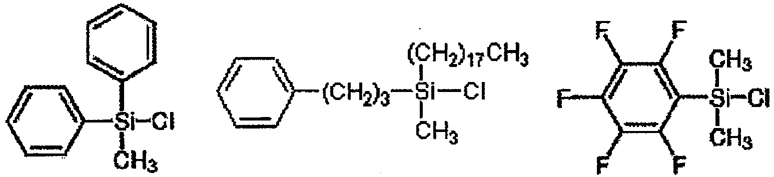

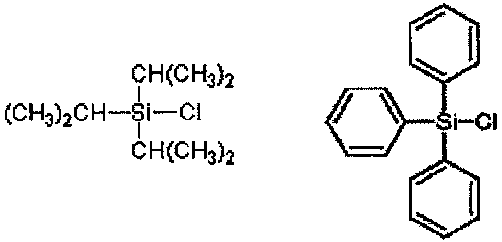

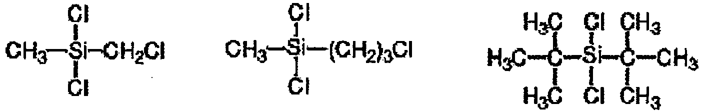

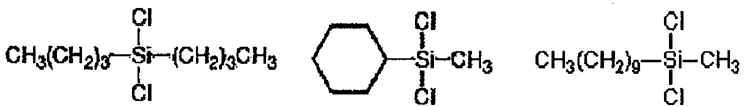

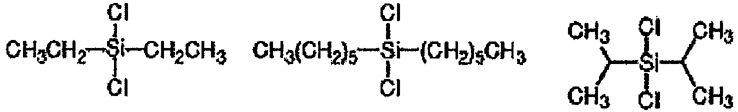

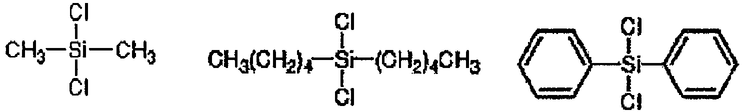

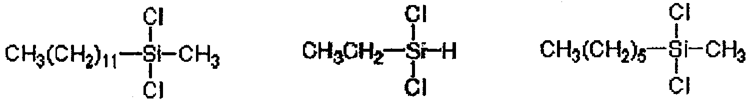

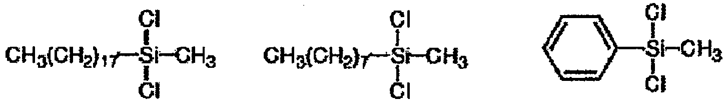

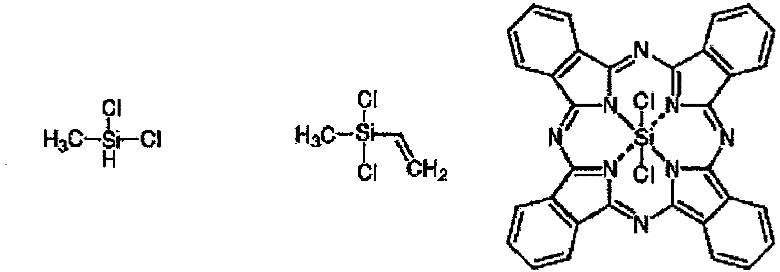

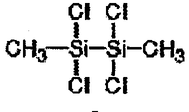

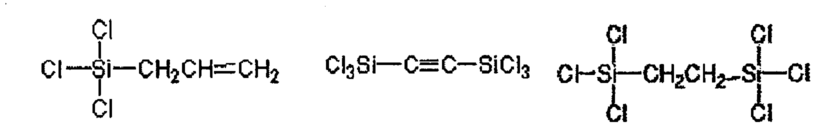

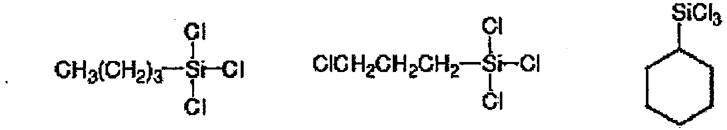

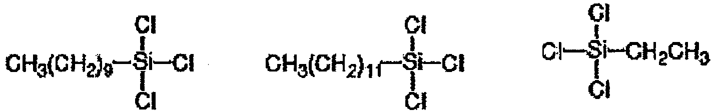

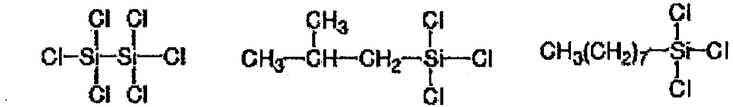

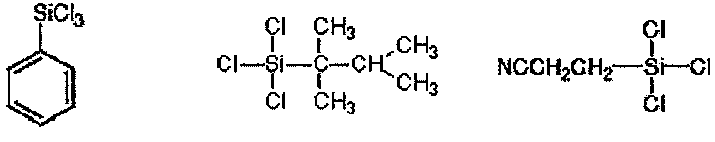

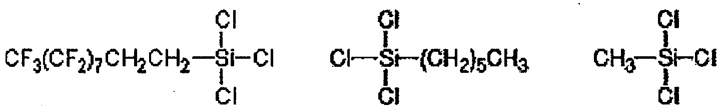

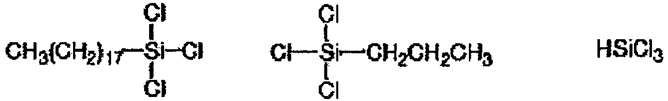

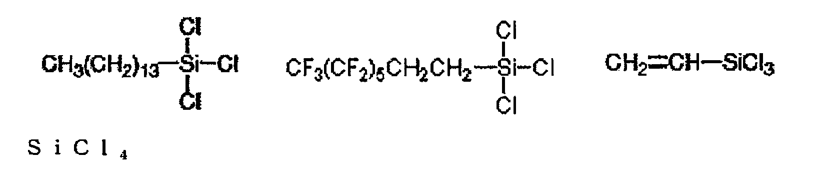

### Halogenosilane other than Si-Cl compounds:

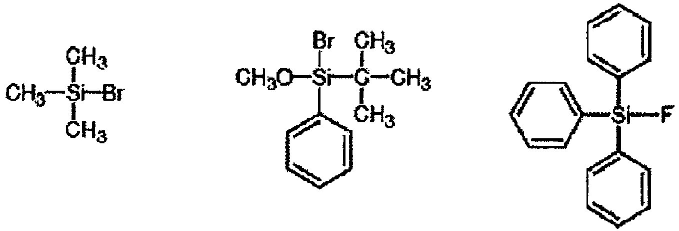

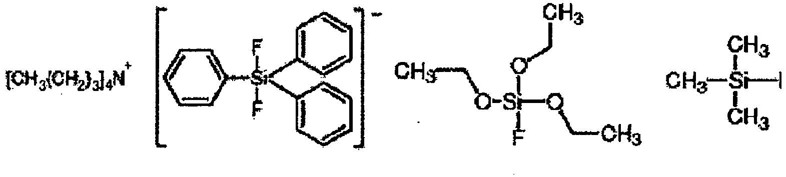

### [Si-(C)₄ compounds]

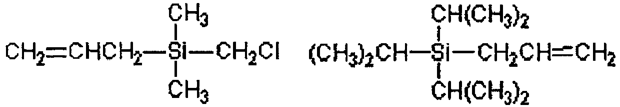

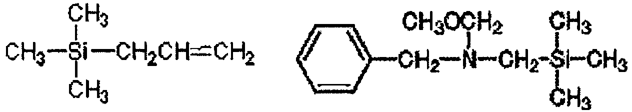

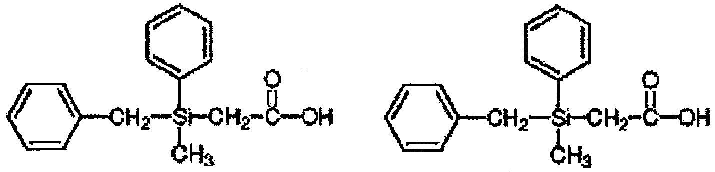

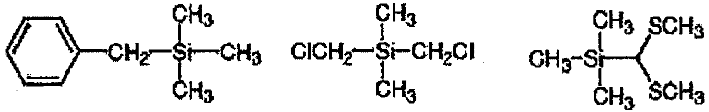

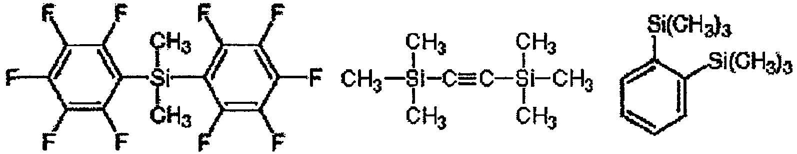

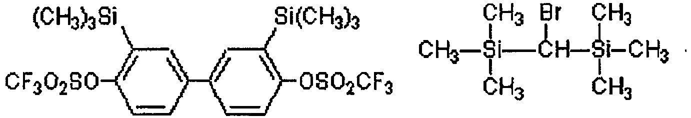

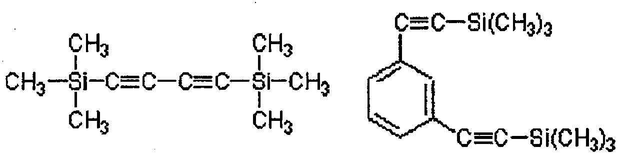

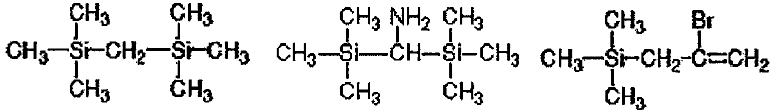

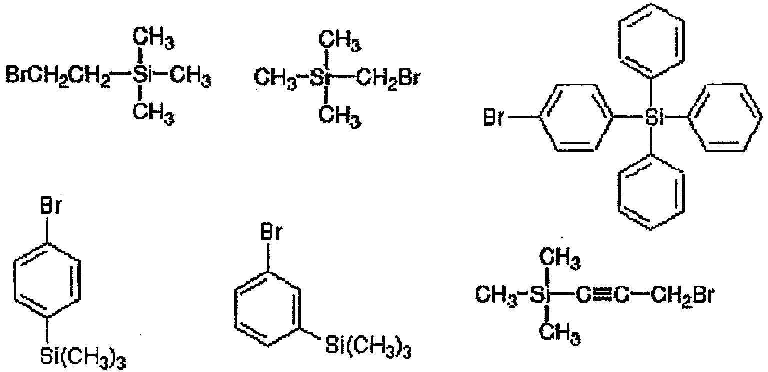

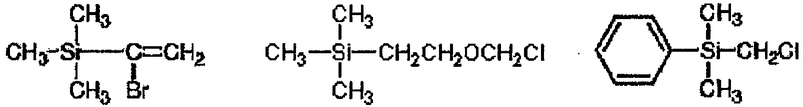

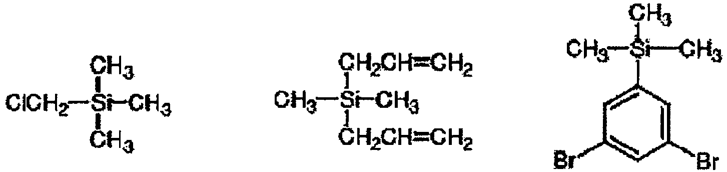

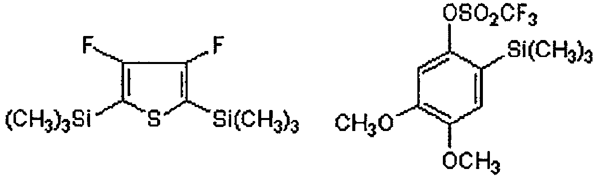

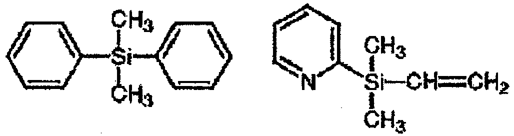

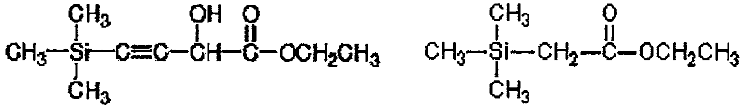

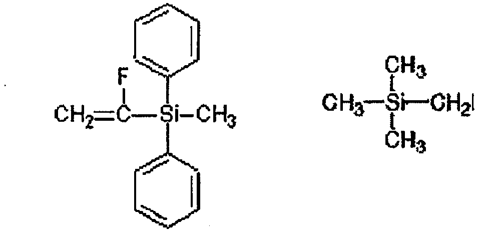

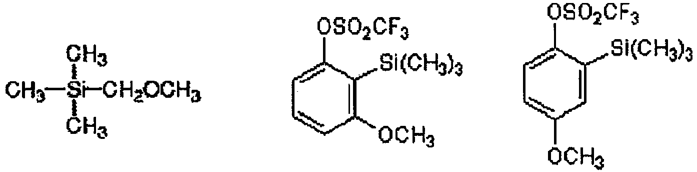

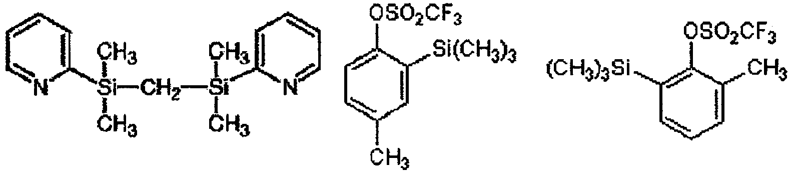

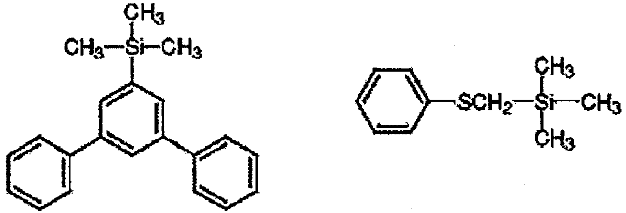

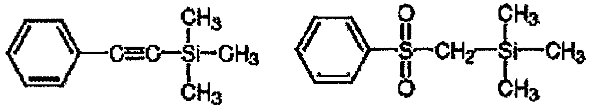

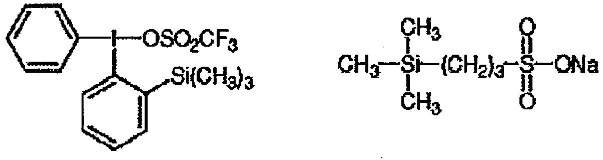

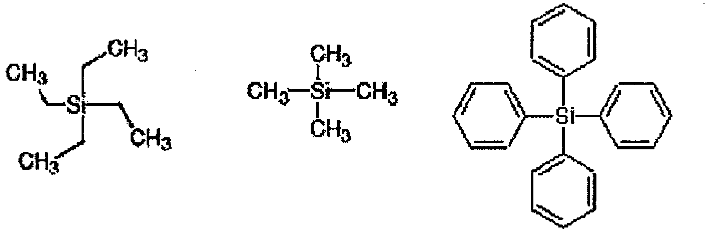

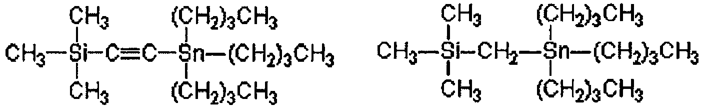

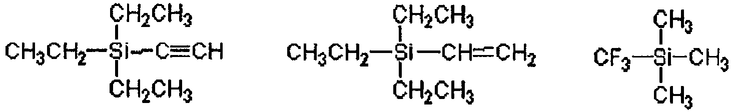

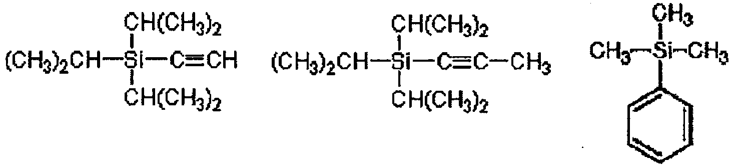

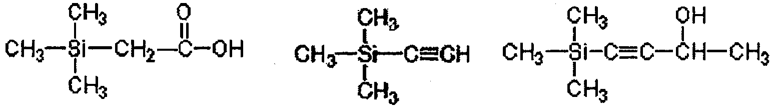

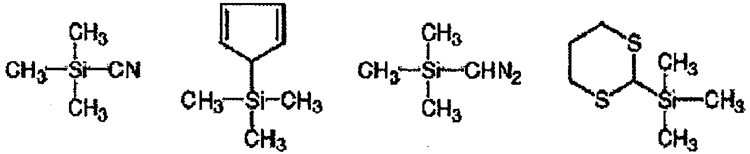

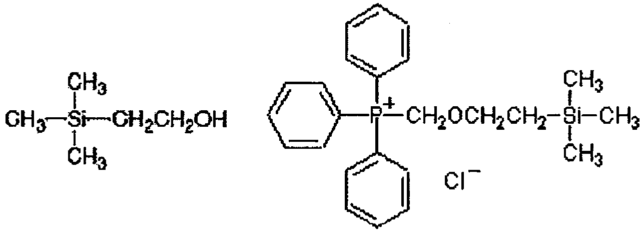

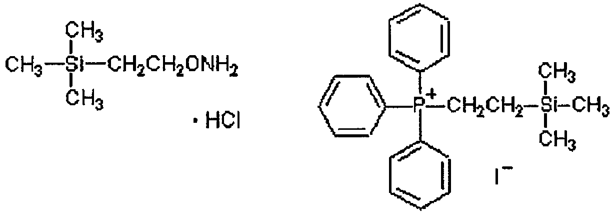

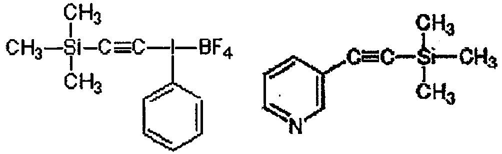

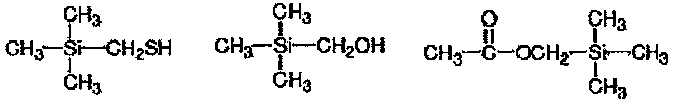

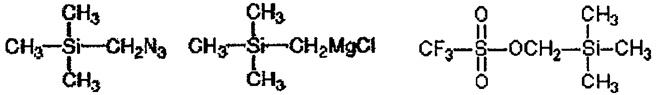

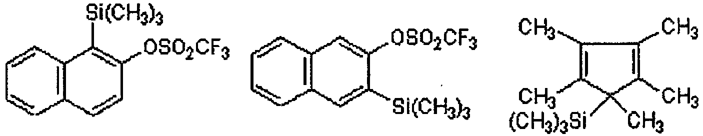

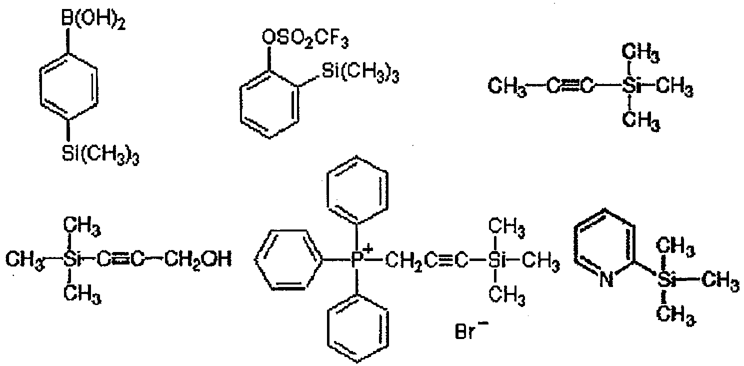

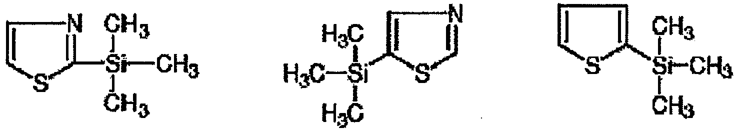

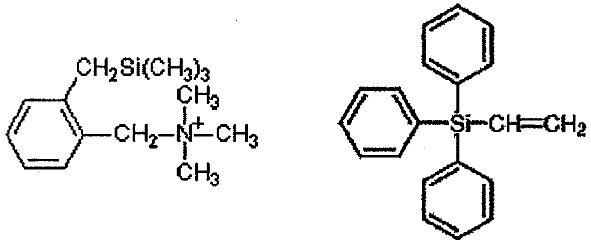

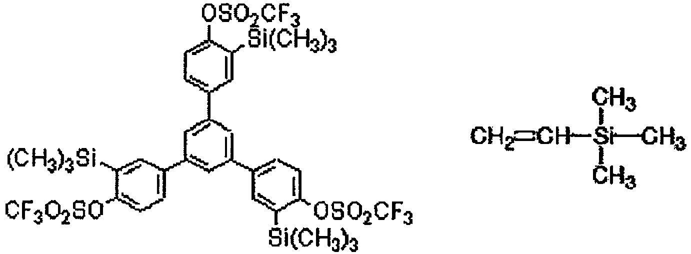

### [Si-Si compounds]

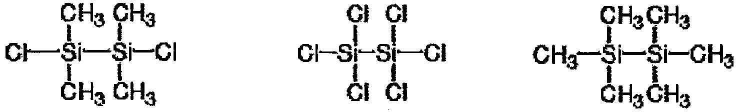

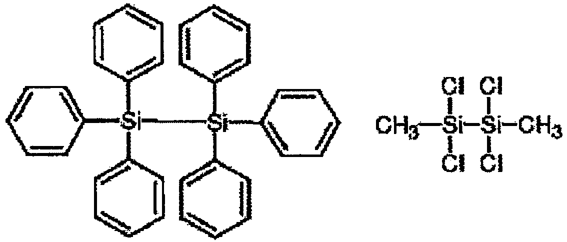

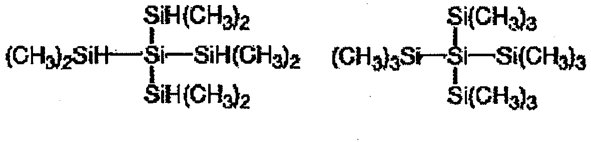

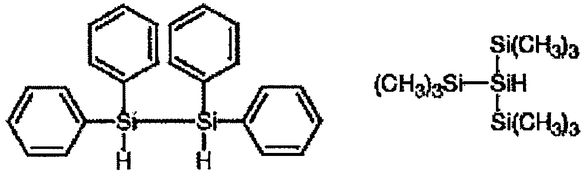

### [Vinylsilane, allylsilane, and ethynylsilane]

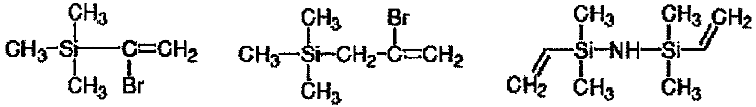

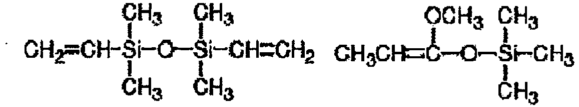

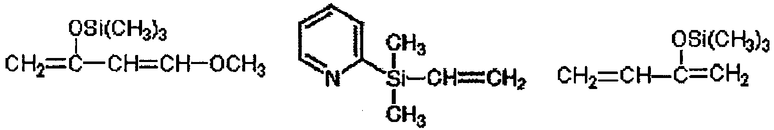

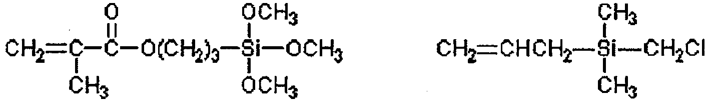

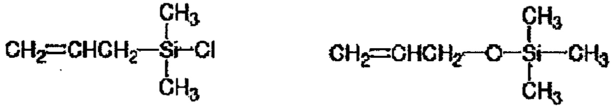

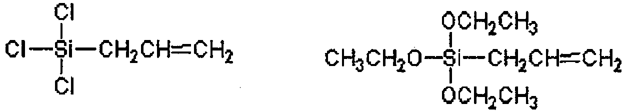

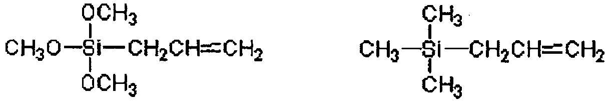

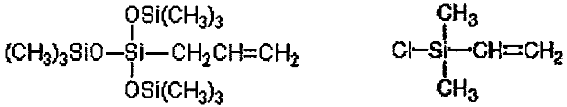

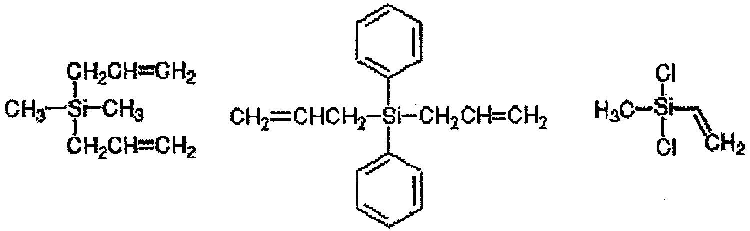

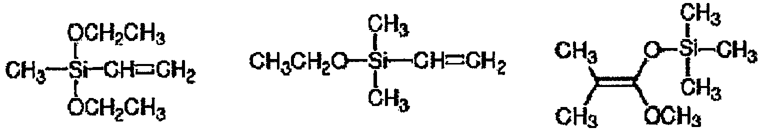

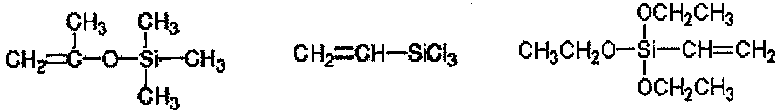

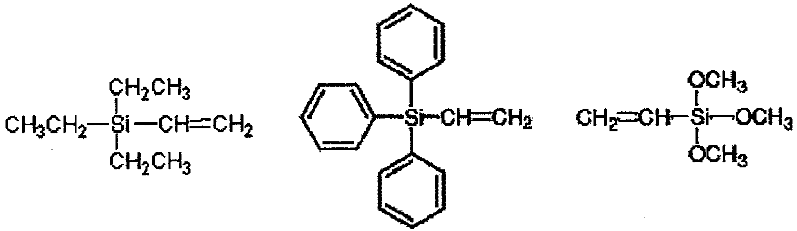

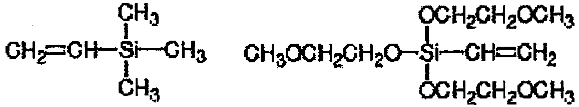

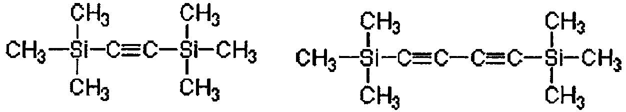

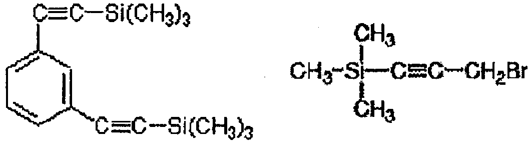

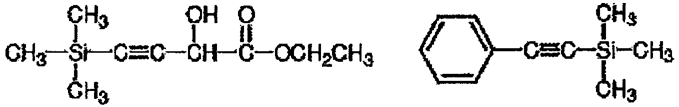

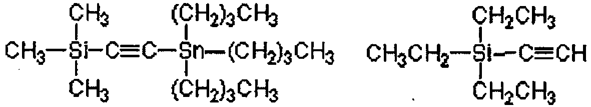

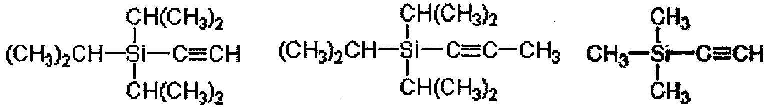

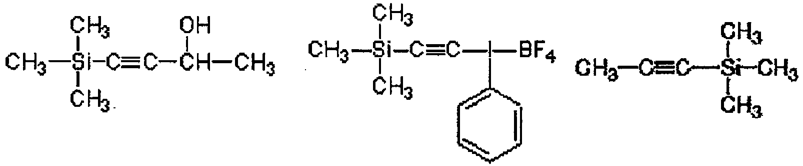

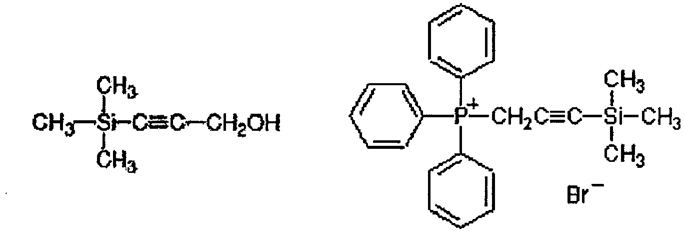

The organosilicon compound is preferably a compound represented by the following formula (2):

(Si(R^{a})ₛ(R^{b})ₜ(R^{c})ᵤ(R^{d})ᵥ(R^{e})_{w})ₓ (2)

wherein
R^{a}, R^{b}, R^{c}, and R^{d} each independently represent a hydrogen atom, a halogen atom, an alkoxy group having 1-10 carbon atoms, an amino group having 1-10 carbon atoms, an alkyl group having 1-10 carbon atoms, an aryl group having 6-10 carbon atoms, an allyl group having 3-10 carbon atoms, or a glycidyl group having 3-10 carbon atoms; R^{e} each independently represents -O-, -NH-, -C≡C-, or a silane bond; s, t, u, and v are each independently 0 or 1, w is an integer of 0-4, and x is 1-20. In the case that x is 1, s + t + u + v is 4 and w is 0. In the case that x is 2-20, s + t + u + v is each independently 0-4 and w is each independently 0-4; in the case that w is an integer of 1 or more, at least two Si atoms are bonding via R^{e} to form a linear, ladder-shaped, cyclic, or polycyclic structure. R^{a}, R^{b}, R^{c}, and R^{d} are each a monovalent group bonding to Si. R^{e} is a divalent group bonding to two Si atoms.

It is preferable that in the formula (2), at least one of R^{a}, R^{b}, R^{c}, and R^{d} is each independently a hydrogen atom, a halogen atom, an alkoxy group having 1-10 carbon atoms, or an amino group having 1-10 carbon atoms, and the other group(s) be each an alkyl group having 1-10 carbon atoms, an aryl group having 6-10 carbon atoms, an allyl group having 3-10 carbon atoms, or a glycidyl group having 3-10 carbon atoms. In the case that x is 2-20, it is preferable that s + t + u + v is each independently 1-3 and w is 1-3.

In the formula (2), R^{a}, R^{b}, R^{c}, and R^{d} are preferably each independently an alkyl group having 1-6 carbon atoms, an aryl group having 6-8 carbon atoms, an alkoxy group having 1-6 carbon atoms, or an amino group having 1-6 carbon atoms; and are more preferably an alkoxy group having 1-4 carbon atoms.

In R^{a}, R^{b}, R^{c}, and R^{d}, the number of carbon atoms of the alkyl group is preferably 1-5. The alkyl group may be linear, cyclic, or branched. A hydrogen atom in the alkyl group may be substituted, for example, with a fluorine atom. Examples of the alkyl group include a methyl group, an ethyl group, a propyl group, a butyl group, and a pentyl group. For example, R^{a}, R^{b}, R^{c}, and R^{d} are preferably each a methyl group, an ethyl group, a propyl group, or an isopropyl group, and more preferably, may be each a methyl group or an ethyl group. The aryl group is, preferably, for example, a phenyl group, a naphthyl group, a methylphenyl group, an ethylphenyl group, or a dimethylphenyl group. The halogen atom is preferably, fluorine, chlorine, bromine, or iodine, and more preferably chlorine.

In R^{a}, R^{b}, R^{c}, and R^{d}, the number of carbon atoms of the alkoxy group is preferably 1-5. The alkoxy group may be linear, cyclic, or branched. A hydrogen atom in the alkoxy group may be substituted, for example, with a fluorine atom. The alkoxy group is preferably a methoxy group, an ethoxy group, a propyloxy group, or a butoxy group, and more preferably a methoxy group or an ethoxy group.

R^{e} is each independently -O-, -NH-, -C≡C-, or a silane bond. R^{e} is preferably -O-, -NH-, or -C≡C-. R^{e} is a divalent group bonding to two Si atoms, and two or more silicon atoms can bond via R^{e} to form a linear, ladder-shaped, cyclic, or polycyclic structure. In the case that x is an integer of 2 or more, silicon atoms may bond each other. Specific preferred examples of the silicon-containing compound include a compound having one Si atom or two or more Si atoms such as the aforementioned Si-H compound, Si-N compound, halogenosilane, Si-(C)₄ compound, Si-Si compound, vinylsilane, allylsilane, and ethynylsilane.

In one embodiment, the silicon-containing compound is a compound represented by formula (3) or formula (4).

SiR⁵₄ (3)

Si_{y}O_{z}R⁶_{4y-2z} (4)

In the formula (3), R⁵ each independently represents a halogen atom or a hydrolyzable group.

In the formula (4), R⁶ each independently represents a halogen atom or a hydrolyzable group; y is 2 or more; z is 1 or more; and 4y - 2z is more than 0.

As used herein, the term "hydrolyzable group" refers to a group which can be eliminated from a main molecular chain of a compound by hydrolysis reaction. Examples of the hydrolyzable group include -OR, -OCOR, -O-N=CR₂, -NR₂, -NHR, and halogen, wherein R represents a substituted or unsubstituted alkyl group having 1-4 carbon atoms, and the hydrolyzable group is preferably -OR (i.e., an alkoxy group). Examples of R include an unsubstituted alkyl group such as a methyl group, an ethyl group, a propyl group, an isopropyl group, an n-butyl group, and an isobutyl group; and a substituted alkyl group such as a chloromethyl group.

Examples of the "halogen atom" include a fluorine atom, a chlorine atom, a bromine atom, and an iodine atom. Among them, a fluorine atom, a chlorine atom, and a bromine atom are preferred, a fluorine atom and a chlorine atom are more preferred, and a chlorine atom is even more preferred.

The content of the silicon-containing compound contained in the surface-treating agent according to the present invention can be, for example, at 0-500 parts by mass, preferably 0-400 parts by mass, and more preferably 25-400 parts by mass, with respect to 100 parts by mass of the total of the compound (as the total mass when two or more compounds are used; hereinafter the same shall apply) represented by the formula (1) in the present invention.

In a surface-treating layer formed from the surface-treating agent containing the silicon-containing compound, the fluorine-containing silane compound according to the present invention segregates in the surface of the surface-treating layer. Thereby, the silicon-containing compound separates the base material and the fluorine-containing silane compound from each other, and hence can prevent the adverse effect to the fluorine-containing silane compound affected by the substance present in the base material. Thus, the silicon-containing compound contributes to the increasing of the weatherability and durability of the surface-treating layer. Particularly in the case that the silicon-containing compound is one capable of forming a siloxane bond by the sol-gel reaction, the silicon-containing compound can form a denser layer and hence increase the weatherability and durability of the surface-treating layer.

Examples of the fluorine-containing oil include, but are not limited to, a compound represented by the following general formula (5) (a perfluoro(poly)ether compound).

R²¹-(OC₄F₈)_{a'}-(OC₃F₆)_{b'}-(OC₂F₄)_{c'}-(OCF₂)_{d'}-R²² (5)

In the formula, R²¹ represents a C₁₋₁₆ alkyl group optionally substituted with one or more fluorine atoms (preferably, a C₁₋₁₆ perfluoroalkyl group); R²² represents a C₁₋₁₆ alkyl group optionally substituted with one or more fluorine atoms (preferably, a C₁₋₁₆ perfluoroalkyl group), a fluorine atom, or a hydrogen atom; and R²¹ and R²² are, more preferably, each independently a C₁₋₃ perfluoroalkyl group.

a', b', c', and d' each represent the number of one of the four types of the repeating units for the perfluoro(poly)ether constituting the main molecular chain of the polymer, and are each independently an integer of 0 or more and 300 or less; the summation of a', b', c', and d' is at least 1, preferably 1-300, and more preferably 20-300. The order of the repeating units with parentheses accompanied by a subscript of a', b', c', or d' is arbitrary in the formula. Among these repeating units, - (OC₄F₈)- may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, - (OCF₂C(CF₃)₂)-, -(OCF(CF₃)CF(CF₃))-,-(OCF(C₂F₅)CF₂)-, and - (OCF₂CF(C₂F₅))-, and is preferably -(OCF₂CF₂CF₂CF₂)-. - (OC₃F₆)- may be any of -(OCF₂CF₂CF₂)-, -(OCF(CF₃)CF₂)-, and - (OCF₂CF(CF₃))-, and is preferably -(OCF₂CF₂CF₂)-. -(OC₂F₄)-may be any of -(OCF₂CF₂)- and -(OCF(CF₃))-, and is preferably -(OCF₂CF₂)-.

Examples of the perfluoro(poly)ether compound represented by the general formula (5) include compounds represented by any of the following general formulas (5a) and (5b), which may be one compound or a mixture of two or more compounds.

R²¹-(OCF₂CF₂CF₂)_{b"}-R²² (5a)

R²¹-(OCF₂CF₂CF₂CF₂)_{a"}-(OCF₂CF₂CF₂)_{b"}-(OCF₂CF₂)_{c"}-(OCF₂)_{d"}-R²² (5b)

In these formulas, R²¹ and R²² are as described above; in the formula (5a), b" is an integer of 1 or more and 100 or less; and in the formula (5b), a" and b" are each independently an integer of 0 or more and 30 or less and c" and d" are each independently an integer of 1 or more and 300 or less. The order of the repeating units with parentheses accompanied by a subscript of a", b", c", or d" is arbitrary in the formula.

The fluorine-containing oil may have an average molecular weight of 1,000-30,000. This average molecular weight provides high surface lubricity.

The fluorine-containing oil may be contained in the surface-treating, for example, at 0-500 parts by mass, preferably 0-400 parts by mass, and more preferably 25-400 parts by mass, respect to 100 parts by mass of the total of the compound represented by the formula (1) in the present invention (as the total mass when two or more compounds are used; hereinafter the same shall apply).

The fluorine-containing oil contributes to the increasing of the surface lubricity of the surface-treating layer.

The silicone oil may be, for example, a linear or cyclic silicone oil having 2,000 or less siloxane bonds. The linear silicone oil may be what is called a straight silicone oil or a modified silicone oil. Examples of the straight silicone oil include dimethyl silicone oil, methylphenyl silicone oil, and methyl hydrogen silicone oil. Examples of the modified silicone oil include that which is obtained by modifying a straight silicone oil with alkyl, aralkyl, polyether, higher fatty acid ester, fluoroalkyl, amino, epoxy, carboxy, or alcohol, or the like. Examples of the cyclic silicone oil include, for example, cyclic dimethylsiloxane oil.

The silicone oil may be contained in the surface-treating agent according to the present invention, for example, at 0-300 parts by mass, and preferably 50-200 parts by mass, respect to 100 parts by mass of the total of the compound represented by the formula (1) in the present invention (as the total mass when two or more compounds are used; hereinafter the same shall apply).

The silicone oil contributes to increasing of the surface lubricity of the surface-treating layer.

Examples of the above-mentioned catalyst include an acid (for example, acetic acid, trifluoroacetic acid, etc.), a base (for example, ammonia, triethylamine, diethylamine, etc.), and a transition metal (for example, Ti, Ni, Sn, etc.) and the like.

The catalyst facilitates the hydrolysis and dehydration condensation of the compound represented by the formula (1) in the present invention to facilitate a formation of the surface-treating layer.

The solvent can be appropriately selected for use in accordance with the compound represented by the formula (1) and the other component. For example, the following solvents are preferably used: a hydrocarbon solvent such as hexane, heptane, and octane; a chlorinated hydrocarbon solvent such as dichloromethane, chloroform, carbon tetrachloride, and dichloroethane; an ether-based solvent such as diethyl ether, dimethoxyethane, diglyme, and triglyme; an ester-based solvent such as diethyl oxalate, ethyl pyruvate, ethyl 2-hydroxybutyrate, ethyl acetoacetate, ethyl acetate, butyl acetate, amyl acetate, ethyl butyrate, butyl butyrate, methyl lactate, ethyl lactate, methyl 3-methoxypropionate, ethyl 3-methoxypropionate, methyl 2-hydroxyisobutyrate, and ethyl 2-hydroxyisobutyrate; a propylene glycol-based solvent such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether; a ketone-based solvent such as acetone, methyl ethyl ketone, methyl isobutyl ketone, 2-hexanone, cyclohexanone, methyl amino ketone, and 2-heptanone; an alcohol-based solvent such as methanol, ethanol, propanol, isopropanol, butanol, and diacetone alcohol; an aromatic hydrocarbon such as benzene, toluene, xylene, and nitrobenzene; a perfluoroaliphatic hydrocarbon having 5-12 carbon atoms (for example, perfluorohexane, perfluoromethylcyclohexane, and perfluoro-1,3-dimethylcyclohexane); a polyfluoroaromatic hydrocarbon (for example, bis(trifluoromethyl)benzene); a polyfluoroaliphatic hydrocarbon; a hydrofluoro ether (HFE) (for example, alkyl perfluoroalkyl ether such as perfluoropropyl methyl ether (C₃F₇OCH₃), perfluorobutyl methyl ether (C₄F₉OCH₃), perfluorobutyl ethyl ether (C₄F₉OC₂H₅), and perfluorohexyl methyl ether (C₂F₅CF(OCH₃)C₃F₇), etc., wherein the perfluoroalkyl group or alkyl group may be linear or branched), a hydrochlorofluorocarbon (for example, ASAHIKLIN AK-225 (tradename)); and a cellosolve-based solvent such as methyl cellosolve, ethyl cellosolve, methyl cellosolve acetate, and ethyl cellosolve acetate, etc.. These solvents may be used alone, or as a mixture of two or more of them.

The solvent may be contained in the surface-treating agent according to the present invention may be, for example, at 0-1,000,000 parts by mass, preferably 0-100,000 parts by mass, and more preferably 25-100,000 parts by mass, respect to 100 parts by mass of the total of the compound represented by the formula (1) in the present invention (as the total mass when two or more compounds are used; hereinafter the same shall apply).

In a preferable embodiment, the surface-treating agent contains the silicon-containing compound, and preferably contains the silicon-containing compound capable of forming a siloxane bond by the sol-gel reaction.

Use of the above-described surface-treating agent allows formation of a surface-treating layer not only having water-repellency, oil-repellency, antifouling property, waterproof property, surface lubricity, abrasion resistance, and so forth, but also having resistance to heat, moisture, light, and so forth, in other words, weatherability, and protective ability or the like against corrosive substances present therearound. Accordingly, the present invention also provides the above-described surface-treating agent. Such a surface-treating agent is preferably used as an antifouling coating agent or a water-proof coating agent.

To form a film of the compound represented by the formula (1) or the surface-treating agent containing the compound represented by the formula (1) (hereinafter, also referred to as "the surface-treating agent according to the present invention", collectively), the surface-treating agent according to the present invention is applied to the base material to coat the surface thereof. The coating method is not limited. For example, a wet coating method and a dry coating method can be used.

Examples of the wet coating method include dip coating, spin coating, flow coating, spray coating, slit coating, roll coating, gravure coating, micro-gravure coating, bar coating, die coating, screen printing, and a similar method.

Examples of the dry coating method include vapor deposition (usually, vacuum deposition), sputtering, CVD, and like methods. Specific examples of the vapor deposition method (usually, a vacuum deposition method) include resistance heating, electron beam, high-frequency heating with microwaves or the like, ion beam, and the like. Specific examples of the CVD method include plasma-CVD, optical CVD, thermal CVD, and a similar method.

Alternatively, coating can be performed by an atmospheric pressure plasma method.

When the wet coating method is used, the surface-treating agent according to the present invention can be diluted with a solvent, and then it can be applied to the surface of the base material. In view of the stability of the surface-treating agent according to the present invention and the volatility of solvent, the following solvents are preferably used: a perfluoroaliphatic hydrocarbon having 5-12 carbon atoms (e.g., perfluorohexane, perfluoromethylcyclohexane, and perfluoro-1,3-dimethylcyclohexane); a polyfluoroaromatic hydrocarbon (e.g., bis(trifluoromethyl)benzene); a polyfluoroaliphatic hydrocarbon (e.g., C₆F₁₃CH₂CH₃ (such as ASAHIKLIN (registered trademark) AC-6000 from AGC Inc.), 1,1,2,2,3,3,4-heptafluorocyclopentane (such as ZEOROLA (registered trademark) H from Zeon Corporation)); a hydrofluoro ether (HFE) (e.g., alkyl perfluoroalkyl ether such as perfluoropropyl methyl ether (C₃F₇OCH₃) (such as Novec (trademark) 7000 from Sumitomo 3M Limited), perfluorobutyl methyl ether (C₄F₉OCH₃) (such as Novec (trademark) 7100 from Sumitomo 3M Limited), perfluorobutyl ethyl ether (C₄F₉OC₂H₅)(such as Novec (trademark) 7200 from Sumitomo 3M Limited), and perfluorohexyl methyl ether (C₂F₅CF(OCH₃)C₃F₇) (such as Novec (trademark) 7300 from Sumitomo 3M Limited), wherein the perfluoroalkyl group or the alkyl group may be linear or branched), and CF₃CH₂OCF₂CHF₂ (such as ASAHIKLIN (registered trademark) AE-3000 from AGC Inc.), etc.. These solvents can be used alone, or two or more of them can be used as a mixture. Among them, a hydrofluoro ether are preferred, and perfluorobutyl methyl ether (C₄F₉OCH₃) and/or perfluorobutyl ethyl ether (C₄F₉OC₂H₅)is particularly preferred.

When the dry coating method is used, the surface-treating agent according to the present invention may be directly subjected to the dry coating method, or diluted with the above solvents as mentioned above and then subjected to the dry coating method.

The amount of the compound represented by the formula (1) to be applied to the base material is not limited, and can be appropriately controlled in accordance with the thickness of a functional film intended.

Subsequently, the film is post-treated, as necessary. This post-treatment is not limited, and may be, for example, a sequential operation of supplying moisture and drying by heating, or a continuous operation with superheated steam.

Between the applied compound represented by the formula (1) on the base material and the base material, a group bonding to Si after hydrolysis (if R¹ is a hydroxy group in all occurrences in the compound represented by the formula (1), the group can be the hydroxy group) and the reactive group present on the surface of the base material react each other, and when the reactive group present on the surface of the base material is a hydroxy group, dehydration condensation is caused. In the compound, the groups therein which bonded to Si after hydrolysis may undergo dehydration condensation. As the result, the bond between the compound represented by the formula (1) and the base material is formed. Additionally, a bond between the compounds can be formed.

That is, the layer formed from the surface-treating agent according to the present invention in the article according to the present invention is a layer in which a silane moiety of the compound represented by the formula (1) bonds to the base material. The layer formed from the surface-treating agent according to the present invention is preferably a layer in which a silane moiety of the compound represented by the formula (1) bonds to the base material and a silane moiety of the compound represented by the formula (1) further bonds each other. When another layer, e.g., a binder layer described later, is present between the base material and the surface-treating layer, the silane moiety of the compound represented by the formula (1) bonds to the another layer thereof substitute for the base material.

Thus, a surface-treating layer derived from the surface-treating agent according to the present invention is formed on the surface of the base material, and then the article according to the present invention is produced.

The thickness of the surface-treating layer is not limited. In use as an optical member, the thickness of the surface-treating layer may be in the range of 1-50 nm or 1-30 nm, and preferably in the range of 1-15 nm.

Hereinabove, the article according to the present invention has been described in detail. The article according to the present invention, the production method therefor, the surface-treating agent and method, and so forth are not limited to those exemplified in the above.

For example, in one embodiment, the article according to the present invention may include a binder layer between the base material and the layer formed from the compound represented by the formula (1) or from the surface-treating agent containing the compound.

The binder layer is capable of separating the surface-treating layer from substances which are present in the base material and can adversely affect the surface-treating layer, such as an ion, thereby contributing to further improvement of the weatherability and durability.

The binder layer is preferably formed from a silicon-containing compound.

The binder layer is preferably formed from a silicon-containing compound and has a polysiloxane structure.

The above-mentioned silicon-containing compound is not limited and may be a silicon-containing compound capable of forming polysiloxane structure on the base material, and is preferably one capable of forming polysiloxane structure, for example, by the sol-gel reaction, the oxidation reaction, or the like.

Examples of the above-mentioned silicon-containing compound include an organosilicon compound, the compound represented by the formula (3), and the compound represented by the formula (4) described above for the silicon-containing compound which may be contained in the surface-treating agent; and a silazane compound.

The silazane compound is preferably represented by the formula (6):

(R¹¹R¹²SiNR¹³)ₖ (6)

wherein
R¹¹, R¹², and R¹³ each independently represent a hydrogen atom, an alkyl group, an aryl group, a vinyl group, or a cycloalkyl group, and at least one of R¹¹, R¹², and R¹³ is a hydrogen atom, preferably R¹¹, R¹², and R¹³ are each a hydrogen atom; and k represents an integer of 1-60. The molecular shape of the silazane compound may be any shape, and, for example, may be linear of cyclic.

The silicon-containing compound can be applied to the base material directly or as a composition.

The silicon-containing compound is preferably dissolved or dispersed in a solvent and applied as a sol composition. A film obtained by applying the sol composition is post-treated for sol-gel reaction, and a binder layer having polysiloxane structure on the base material will be formed.

The solvent is not limited and may be any solvent as long as the silicon-containing compound is satisfactorily dissolved or dispersed therein; and alcohol, ether, glycol, or glycol ether is preferred. Preferred examples of the solvent include methanol, ethanol, 1-propanol, 2-propanol, 1-butanol, 2-butanol, iso-butyl alcohol, 1-pentanol, 2-pentanol, 2-methyl-2-pentanol, 2-methoxyethanol, 2-ethoxyethanol, 2-butoxyethanol, ethylene glycol, diethylene glycol, triethylene glycol, propylene glycol, dipropylene glycol monomethyl ether, diethylene glycol monomethyl ether, diethylene glycol monoethyl ether, diethylene glycol monobutyl ether, triethylene glycol monomethyl ether, and diethylene glycol monohexyl ether.

The sol composition may contain a pH adjuster or various additives to enhance the adhesion to the base material (e.g., a stabilizer, a thickener), as necessary.

The method for applying the silicon-containing compound or the sol composition to the surface of the base material is not limited, and examples thereof include dip coating, spin coating, flow coating, spray coating, slit coating, roll coating, gravure coating, micro-gravure coating, bar coating, die coating, screen printing, and a similar method.

Subsequently, the film of the silicon-containing compound or the sol composition on the base material is post-treated. This post-treatment is by heating. After heating of the film of the sol composition, the film will be cured and a binder layer having a polysiloxane structure will be formed.

In the heating, a heating temperature can be appropriately selected depending on the base material and the silicon-containing compound which is used, and the heating temperature is preferably 100°C or higher and 900°C or lower, and more preferably 110°C or higher and 800°C or lower, and can be, for example, 120°C or higher and 600°C or lower.

The heating time in the heating is preferably 5 minutes or longer and 500 minutes or shorter, and more preferably 10 minutes or longer and 400 minutes or shorter, and can be, for example, 20 minutes or longer and 300 minutes or shorter.

Next, the surface-treating agent according to the present invention is applied onto the binder layer as described above, and left to stand, or be post-treated, as necessary, to form a surface-treating layer on the binder layer.

An article thus obtained can be more superior in weatherability and durability because of the binder layer included between the base material and the surface-treating layer.

In another embodiment, the surface-treating agent according to the present invention may be applied onto the film of the silicon-containing compound or the sol composition (hereinafter, also referred to as a "silicon-containing compound film", collectively) before curing the silicon-containing compound or the sol composition, and then be post-treated (for example, be heated) to form a surface-treating layer.

When the surface-treating agent according to the present invention is applied to the silicon-containing compound film before curing, the surface-treating agent according the present invention can diffuse from the surface of the silicon-containing compound film into the inside thereof, or dissolve into the film. When the surface-treating agent diffuses or dissolves into the silicon-containing compound film, the silicon-containing compound film and the surface-treating agent according to the present invention can form one layer (a single layer). Thus, the application of the surface-treating agent according to the present invention to the silicon-containing compound film can be rephrased as the addition of the compound represented by the formula (1) or the surface-treating agent containing the compound to the silicon-containing compound or the sol composition which is on the base material.

The term "single layer" herein refers to a layer having no interface formed by lamination therein, where the composition of components constituting the layer is constant or continuously varying over throughout the thickness direction of the layer (or film). In the present invention, a layer such that the composition in the intermediate part of the layer is continuously varying from that of the upper part to that of the lower part is regarded as the single layer, even when the upper part and the lower part in the layer are completely different in composition. The range of the region wherein the composition continuously varies is 100 nm or larger. For example, a layer such that the composition of the upper part is A and that of the lower part is B in the layer is regarded as the single layer, if the layer includes any region in which the composition A and the composition B are mixed and the composition is continuously varying from A to B (or from B to A) over a range of 100 nm or larger in the thickness direction. As the determination of the composition of a layer, the element concentration in the depth direction can be measured by using an ion beam ESCA measurement.

### Examples

### Example 1

(4-tridecafluorohexylphenyl)trimethoxysilane was dissolved in perfluorobutyl ethyl ether such that the concentration was 2wt% to prepare a surface-treating agent 1. The surface-treating agent 1 prepared was then applied onto a chemically toughened glass sheet by spin coating. Thereafter, the chemically toughened glass sheet with the surface-treating agent was left to stand at a temperature of 65°C and a humidity of 90% for 14 hours to form a surface-treating layer of Example 1.

### Comparative Example 1

A surface-treating agent 2 was prepared in the same manner as in Example 1 except that (3,3,4,4,5,5,6,6,7,7,8,8,8-tridecafluorooctyl)trimethoxysilane was used instead of (4-tridecafluorohexylphenyl)trimethoxysilane. Subsequently, a surface-treating layer of Example 2 was formed in the same manner as in Example 1 except that the surface-treating agent 2 prepared was used.

### Evaluation of weatherability

A static water contact angle after light irradiation was measured for the surface-treating layers formed on the surface of the base material in Example 1 and Comparative Example 1. The light irradiation was by a SUPER XENON TESTER (XER-W75 from IWASAKI ELECTRIC CO., LTD., irradiance: 2.23 W/m² at 420 nm), and the measurement of the static water contact angles was by a contact angle meter (from Kyowa Interface Science Co., Ltd.) with 2 µL of water. First, as initial evaluation, a static water contact angle of a surface-treating layer of which the surface had not still contacted with anything after formation thereof was measured (exposure time is zero hour). Thereafter, the static water contact angle (degree) was measured for each defined time until a cumulative exposure time of 400 hours. The results are shown in Table 1.

**[Table 1]**

| Exposure time (hour) | Contact angle (degree) | |
|---|---|---|
| | Example 1 | Comparative Example 1 |
| 0 | 110 | 106 |
| 100 | 110 | 105 |
| 200 | 110 | 103 |
| 300 | 110 | 101 |
| 400 | 109 | 100 |

As can be understood from the results, the silane compound having a phenyl group according to the present invention was confirmed that the weatherability was improved as compared with Comparative Example 1 which did not have such structure.

### Example 2

A polysilazane compound (NL120A, Merck KGaA) was dissolved in dibutyl ether such that the concentration was 3wt% to prepare a binder-treatment agent 1. The binder-treatment agent 1 prepared was then applied onto a chemically toughened glass sheet by spin coating. Thereafter, the chemically toughened glass sheet was left to stand at room temperature for 30 minutes to form a binder layer, and then the surface-treating agent 1 prepared in Example 1 was applied thereto by spin coating under the same conditions. Thereafter, the chemically toughened glass sheet with the surface-treating agent was left to stand at a temperature of 65°C and a humidity of 90% for 14 hours to form a surface-treating layer of Example 2.

### Comparative Example 2

A surface-treating layer of Comparative Example 2 was formed in the same manner as in Example 2 except that the surface-treating agent 2 was used instead of the surface-treating agent 1.

### Evaluation of acid resistance

First, as initial evaluation, a static water contact angle of a surface-treating layer of which the surface had not still contacted with anything after formation thereof was measured. Thereafter, each of the treated glass sheets in Example 2 and Comparative Example 2 was dipped in 0.1 mol% nitric acid aqueous solution, and the static water contact angle (degree) was measured for each defined time until a cumulative dipping time of 7 days. The results are shown in Table 2.

**[Table 2]**

| Exposure time (day) | Contact angle (degree) | |
|---|---|---|
| | Example 2 | Comparative Example 2 |
| 0 | 108 | 106 |
| 3 | 108 | 100 |
| 7 | 105 | 98 |

### Evaluation of alkali resistance

First, as initial evaluation, a static water contact angle of a surface-treating layer of which the surface had not still contacted with anything after formation thereof was measured. Thereafter, each of the treated glass sheets in Examples 1 and 2 and Comparative Examples 1 and 2 was dipped in 1 mol% NaOH aqueous solution, and the static water contact angle (degree) was measured for each defined time. The evaluation was terminated when the measured value of a contact angle was smaller than 50 degrees, and otherwise continued until a cumulative dipping time of 24 hours at the longest. The results are shown in Table 3 (wherein the symbol "-" represents no measurement).

**[Table 3]**

| Exposure time (hour) | Contact angle (degree) | | | |
|---|---|---|---|---|
| | Example 1 | Example 2 | Comparative Example 1 | Comparative Example 2 |
| 0 | 106 | 108 | 107 | 104 |
| 1 | 100 | 101 | 44 | 77 |
| 4 | 97 | 100 | - | 41 |
| 24 | 50 | 92 | - | - |

As can be understood from the results, the silane compound having a phenyl group according to the present invention was confirmed that the chemical resistance was improved as compared with Comparative Examples 1 and 2 which did not have such structure. In addition, it was confirmed that a higher effect was obtained in combination with a binder layer.

### Industrial Applicability

The surface-treating agent according to the present invention can be suitably used to form a surface-treating layer on the surface of a wide variety of base materials, in particular, base materials requiring weatherability. The article according to the present invention can be suitably used under environments in which weatherability is required.

## Claims

1. An article comprising a base material and a layer formed from a compound represented by the following formula (1) or from a surface-treating agent comprising the compound: 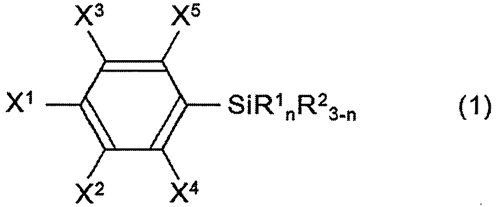 wherein
X¹ to X⁵ each independently represent a hydrogen atom, a halogen atom, a hydrocarbon group, a nitro group, a hydroxy group, or an Rf group, provided that at least one of X¹ to X⁵ is the Rf group;
the Rf group represents R¹⁵-R¹⁶-;
R¹⁵ represents a fluorine-containing hydrocarbon group optionally having an ether bond;
R¹⁶ represents a single bond or a divalent organic group;
R¹ each independently in each occurrence represents a hydroxy group, a hydrolyzable group, or a halogen atom;
R² each independently in each occurrence represents a hydrogen atom, an alkyl group, or an aryl group; and
n is an integer of 1 to 3.

2. The article according to claim 1, wherein X¹ is the Rf group.

3. The article according to claim 1 or 2, wherein X¹ is the Rf group, and X² to X⁵ are each a hydrogen atom.

4. The article according to any one of claims 1 to 3, wherein R¹⁵ is a perfluorohydrocarbon group optionally having an ether bond.

5. The article according to any one of claims 1 to 4, wherein R¹⁵ is F-CₚF₂ₚ-, wherein p is an integer of 1 to 100, and R¹⁶ is a single bond.

6. The article according to any one of claims 1 to 3, wherein R¹⁵ is a group represented by the following formula:
R³-PFPE-
wherein
R³ independently in each occurrence represents an alkyl group having 1 to 16 carbon atoms optionally substituted with one or more fluorine atoms; and
PFPE is a group represented by -(OC₆F₁₂)ₐ-(OC₅F₁₀)_{b}-(OC₄F₈)_{c}-(OC₃F₆)_{d}-(OC₂F₄)ₑ-(OCF₂)_{f}-, wherein a, b, c, d, e, and f are each independently an integer of 0 or more and 200 or less, provided that the summation of a, b, c, d, e, and f is at least 1, and the order of the repeating units with parentheses accompanied by a subscript of a, b, c, d, e, or f is arbitrary in the formula, and
R¹⁶ is a single bond or an alkyl group having 1-4 carbon atoms.

7. The article according to any one of claims 1 to 6, further comprising a binder layer between the base material and the layer formed from the compound represented by the formula (1) or from the surface-treating agent comprising the compound, wherein the binder layer is formed from a silicon-containing compound.

8. The article according to claim 7, wherein the silicon-containing compound is one or more compounds selected from the group consisting of a Si-H compound, a Si-N compound, a Si-O compound, halogenosilane, a Si-(C)₄ compound, a Si-Si compound, vinylsilane, allylsilane, and ethynylsilane.

9. The article according to claim 7, wherein the silicon-containing compound is at least one compound represented by formula (3) or formula (4):
SiR⁵₄ (3)
wherein
R⁵ each independently represents a halogen atom or a hydrolyzable group,
Si_{y}O_{z}R⁶_{4y-2z} (4)
wherein
R⁶ each independently represents a halogen atom or a hydrolyzable group;
y is 2 or more;
z is 1 or more; and
4y - 2z is more than 0.

10. The article according to any one of claims 1 to 6, wherein the surface-treating agent further comprises a silicon-containing compound.

11. The article according to any one of claims 1 to 10, wherein the base material is glass, sapphire glass, resin, metal, ceramic, semiconductor, fiber, fur, leather, or wood.

12. The article according to any one of claims 1 to 11, which is an optical member or a building member.

13. A surface-treating agent comprising:
(A) a compound represented by the following formula (1) : 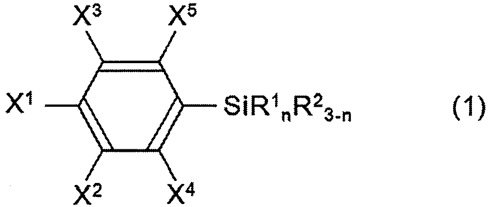 wherein
X¹ to X⁵ each independently represent a hydrogen atom, a halogen atom, a hydrocarbon group, a nitro group, a hydroxy group, or an Rf group, provided that at least one of X¹ to X⁵ is the Rf group;
the Rf group represents R¹⁵-R¹⁶-;
R¹⁵ represents a fluorine-containing hydrocarbon group optionally having an ether bond;
R¹⁶ represents a single bond or a divalent organic group;
R¹ each independently in each occurrence represents a hydroxy group, a hydrolyzable group, or a halogen atom;
R² each independently in each occurrence represents a hydrogen atom, an alkyl group, or an aryl group; and
n is an integer of 1 to 3; and
(B) one or more additional components selected from a silicon-containing compound, a fluorine-containing oil, a silicone oil, and a solvent.

14. The surface-treating agent according to claim 13, wherein the additional component includes a silicon-containing compound.

15. The surface-treating agent according to claim 13 or 14, wherein the silicon-containing compound is one or more compounds selected from the group consisting of a Si-H compound, a Si-N compound, a Si-O compound, halogenosilane, a Si-(C)₄ compound, a Si-Si compound, vinylsilane, allylsilane, and ethynylsilane.

16. The surface-treating agent according to claim 13 or 14, wherein the silicon-containing compound is at least one compound represented by formula (3) or formula (4):
SiR⁵₄ (3)
wherein
R⁵ each independently represents a halogen atom or a hydrolyzable group,
Si_{y}O_{z}R⁶_{4y-2z} (4)
wherein
R⁶ each independently represents a halogen atom or a hydrolyzable group;
y is 2 or more;
z is 1 or more; and
4y - 2z is more than 0.

17. The surface-treating agent according to any one of claims 13 to 16, wherein the fluorine-containing oil is one or more compounds represented by the following formula (5):
R²¹-(OC₄F₈)_{a'}-(OC₃F₆)_{b'}-(OC₂F₄)_{c'}-(OCF₂)_{d'}-R²² (5)
wherein
R²¹ represents a C₁₋₁₆ alkyl group optionally substituted with one or more fluorine atoms;
R²² represents a C₁₋₁₆ alkyl group optionally substituted with one or more fluorine atoms;
a', b', c', and d' are each independently an integer of 0 or more and 300 or less, provided that the summation of a', b', c', and d' is at least 1, and the order of the repeating units with parentheses accompanied by a subscript of a', b', c', or d' is arbitrary in the formula.

18. The surface-treating agent according to any one of claims 13 to 17, wherein the silicone oil is a linear or cyclic silicone oil having 2,000 or less siloxane bonds.

19. The surface-treating agent according to any one of claims 13 to 18, wherein the solvent is one or more solvents selected from a hydrocarbon solvent, a chlorinated hydrocarbon solvent, an ether-based solvent, an ester-based solvent, a propylene glycol-based solvent, a ketone-based solvent, an alcohol-based solvent, an aromatic hydrocarbon, a C₅₋₁₂ perfluoroaliphatic hydrocarbon, a polyfluoroaromatic hydrocarbon, a polyfluoroaliphatic hydrocarbon, a hydrofluoroether, a hydrochlorofluorocarbon, and a cellosolve-based solvent.

20. The surface-treating agent according to any one of claims 13 to 19, which is used as an antifouling coating agent or a water-proof coating agent.
